# EUROPEAN PATENT APPLICATION

(11) **EP 4 826 331 A1**
(43) Date of publication of application: **21.10.2026**
(21) Application number: 26167687.8
(22) Date of filing: 25.03.2026
(51) Int. Cl.: G01B 21/04, B05D 1/26, G01B 11/06, G01B 21/08, G01N 21/86, G01N 21/89, G01N 21/892, H01M 4/04, H01M 4/139, G01N 21/84

(54) **AUTOMATIC COATING PATTERN IDENTIFICATION**

(30) Priority: 14.04.2025 US 202519178234
(71) Applicant: Honeywell International Inc., Charlotte, NC 28202 (US)
(72) Inventor: THALORE, Sudhir, Charlotte, 28202 (US); CHOI, Joyce, Charlotte, 28202 (US); NAFISSI, Pezhman, Charlotte, 28202 (US)
(74) Representative: Haseltine Lake Kempner LLP

(57) **Abstract**

A scanning apparatus includes a scanner head or other scanner device configured to take measurements of a sheet of flat stock of material having a pattern of coating material disposed on one or more of the top surface and/or a bottom surface of the sheet. The scanning apparatus can perform one or more start-up procedures by scanning the sheet as the sheet moves past the scanner head in a machine direction in order to generate a coating profile of the pattern of the coating matter disposed on the surface(s) of the sheet. The coating profile may then be used as a set of baseline measurements for quality control purposes related to further quantities of production of the sheet.

## Description

### TECHNICAL FIELD

Embodiments as described in this disclosure relate to the field of processing sheet material, and more specifically to processing of sheet materials that have coating material applied one or more sides of the sheet material.

### BACKGROUND

On-line measurements are used to detect properties of sheet materials during manufacture to enable prompt control of the sheetmaking processes and, thus, to assure sheet quality while reducing the quantity of substandard sheet material which might be produced. One of the main complications in making on-line measurements during sheetmaking is that the physical properties of sheet materials usually vary in the machine direction (MD), as well as in the cross-wise direction. MD refers to the direction of travel of the sheet material during manufacture, and the terms "cross-wise direction" (CD) and "width-wise" refer to the direction across the surface of a sheet perpendicular to the MD.

To detect variations in sheet materials, scanning sensors are employed that periodically traverse back and forth across a sheetmaking machine in the cross-wise direction while detecting values of a selected sheet property, such as sheet/coating thickness, basis weight, or temperature along each scan. Normally, the sheet being produced is traversed from edge to edge during each scan. The time required for a typical scan is generally between a few seconds to tens of seconds depending on the cross-direction width, which can be many meters. The rate at which measurement readings are provided by such scanners is usually adjustable. A typical rate is about one measurement reading every millisecond.

### SUMMARY

As used herein an industrial process facility includes field devices and processing equipment that runs an industrial process involving a tangible material utilizing the disclosed embodiments for processing and quality control. Embodiments include processing methods and techniques, utilizing a scanner apparatus, to scan properties of various areas of a sheet of flat stock of material having a coating material disposed on one or more surfaces of the sheet, such as the top surface and/or a bottom surface of the sheet. In various embodiments, the sheet stock is used in fabricating electrodes for lithium-ion electrochemical cells and batteries.

An illustrative and non-limiting embodiment incudes a method comprising: positioning a scanner head at a plurality of bin locations distributed in a width-wise direction across a sheet of flat stock material having a pattern of coating material disposed on at least one surface of the sheet of flat stock material, the scanner head configured to measure basis weight of the sheet; taking at each of the bin locations and using the scanner head, a plurality of basis weight measurements of the sheet as the sheet is moving past the scanner head in a machine direction MD; determining a baseline value for each of the bin locations based on the plurality of basis weight measurements taken while the scanner head was positioned at the bin location; and generating a coating profile for the sheet based on a mapping of the baseline values determined for each of the bin locations to the corresponding bin locations, wherein the coating profile includes information indicative of an expected positioning for each of a plurality of patch gaps extending in a cross-wise orientation across the sheet.

Additionally or alternatively, the method may further include wherein positioning the scanner head includes positioning the scanner head at each of the plurality of bin locations in a sequence of adjacent bin locations, the sequence of adjacent bin locations positioned in a cross-wise direction across the sheet and equally spaced in the cross-wise direction from one another across a width of the sheet. Additionally or alternatively, the method may further include wherein taking a plurality of measurements of the sheet at each of the bin locations as the sheet is moving past the scanner head in a machine direction MD includes maintaining the positioning of the scanner head at each of the bin locations for a predetermined time period. Additionally or alternatively, the method may further include wherein determining the baseline value for each of the bin locations based on the plurality of measurements taken while the scanner head was positioned at the bin location includes: summing the values of the measurements taken while the scanner head was positioned at the bin location; and dividing the sum of the values of the measures taken while the scanner head was positioned at the bin location by a number of the measurements taken while the scanner head was positioned at the bin location.

Additionally or alternatively, the method may further include wherein positioning the scanning device includes: actuating the scanner head to make one or more cross-wise passes across a width of the sheet while taking s measurements of the sheet during the one or more cross-wise passes; determining the location of the strip edges of the coating material disposed on the at least one surface of the sheet based on the measurements taken during the one or more cross-wise passes; determining the location of areas in the cross-wise direction of the sheet that include coating material disposed on the at least one surface of the sheet; positioning the scanner head at each of a first set of cross-wise positions around the determined locations of the strip edges, and taking a plurality of measurements of the sheet at each of the first set of cross-wise positions; positioning the scanner head at one or more cross-wise positions determined to include coating material disposed on the at least one surface of the sheet, and taking a plurality of measurements of the sheet at each of the second set of cross-wise positions; updating the coating profile for the sheet based on the measurement taken at each of the first set of cross-wise positions and the second set of cross-wise positions.

Additionally or alternatively, the method may further include wherein the patch gaps comprise areas of the at least one surface of the sheet where no coating material is disposed. Additionally or alternatively, the method may further comprise: scanning, using the scanning device, the sheet in a zig-zag pattern while taking measurements of the sheet; and determining one or more quality parameters related to the pattern of coating disposed on the surface of the sheet by comparing the measurements taken in the zig-zag pattern to the coating profile generated for the sheet. Additionally or alternatively, the method may further include wherein the one or more quality parameters includes determining that the patch edges are positioned in the proper locations longitudinally along the length of the sheet. Additionally or alternatively, the method may further include wherein the one or more quality parameters includes determining that a coating for the areas of the sheet where coating material is disposed on the sheet is within an acceptable basis weight range.

An illustrative and non-limiting embodiment incudes a system comprising: a scanner apparatus comprising a scanner head coupled to a scanner frame, the scanner frame configured to move the scanner head back and forth in a cross-wise direction along the scanner frame while a sheet of flat stock material passes through the scanner frame in a machine direction MD, the sheet having a pattern of coating material disposed on at least one surface of the sheet, and wherein the scanner head is configured to take measurements of the sheet as the sheet moves in the machine direction MD past the scanner head; a processor coupled to the scanner apparatus, the processor configured to: control the positioning of the scanner head to measure basis weight of the sheet at each of a plurality of bin locations distributed in a width-wise direction across the sheet; control the scanner head to take, at each of the bin locations, a plurality of measurements of the sheet as the sheet is moved past the scanner head in a machine direction MD; receive at the processor the plurality of measurements taken by the scanner head at each of the bin locations; determine a baseline value for each of the bin locations based on the plurality of measurements taken while the scanner head was positioned at the bin location; and generate a coating profile for the sheet based on a set of baseline values determined for each of the bin locations, wherein the coating profile includes information indicative of an expected positioning for each of a plurality of patch gaps extending in a cross-wise orientation across the sheet.

Additionally or alternatively, the system may further include wherein the control of the positioning of the scanner head at each of the plurality of bin locations in a sequence of adjacent bin locations, the sequence of adjacent bin locations positioned in a cross-wise direction across the sheet and equally spaced in the cross-wise direction from one another across a width of the sheet. Additionally or alternatively, the system may further include wherein the processor is configured to determine the baseline value for each of the bin locations based on the plurality of measurements taken while the scanner head was positioned at the bin location, the processor configured to: sum the values of the measurements taken while the scanner head was positioned at the bin location; and divide the sum of the values of the measures taken while the scanner head was positioned at the bin location by a number of the measurements taken while the scanner head was positioned at the bin location. Additionally or alternatively, the system may further include wherein the patch gaps comprise areas of the at least one surface of the sheet were no coating material is disposed.

Additionally or alternatively, the system may further include wherein the processor is further configured to: control the operation of the scanner head to cause the scanner head to scan the sheet in a zig-zag pattern while taking measurements of the sheet; and determine one or more quality parameters related to the pattern of the coating material disposed on the surface of the sheet by performing a comparison of the measurements taken in the zig-zag pattern to the coating profile generated for the sheet. Additionally or alternatively, the system may further include wherein the one or more quality parameters includes the processor configured to determine whether the patch edges are positioned in the proper locations longitudinally along the length of the sheet. Additionally or alternatively, the system may further include wherein the one or more quality parameters includes the processor configured to determine whether a basis weight of coating for the areas of the sheet where coating material is disposed on the sheet is within an acceptable basis weight range.

An illustrative and non-limiting embodiment incudes non-transitory computer readable medium comprising program instructions that when executed by a processor, cause the processor to perform a method comprising: controlling the positioning of a scanner head configured to measure of a coating provided on at least one surface of a sheet of flat stock material at each of a plurality of bin locations distributed in a width-wise direction across the sheet; controlling the scanner head to take, at each of the bin locations, a plurality of measurements as the sheet is moved past the scanner head in a machine direction MD; receiving, at the processor, the plurality of measurements taken by the scanner head at each of the bin locations; determining a baseline value for each of the bin locations based on the plurality of measurements taken while the scanning device was positioned the bin location; and generating a coating profile for the sheet based on a set of baseline values determined for each of the bin locations, wherein the coating profile includes information indicative of an expected positioning for each of a plurality of patch gaps extending in a cross-wise orientation across the sheet.

Additionally or alternatively, the non-transitory computer readable medium may further include wherein controlling the positioning the scanner head includes positioning the scanner head at each of the plurality of bin positions in a sequence of adjacent bin locations, the sequence of adjacent bin locations positioned in a cross-wise direction across the sheet and equally spaced in the cross-wise direction from one another across a width of the sheet. Additionally or alternatively, the non-transitory computer readable medium may further comprise program instructions that when executed by the processor, cause the processor to perform the method further comprising: controlling the operation of the scanner had to scan the sheet in a zig-zag pattern while taking measurements of the sheet; receiving at the processor the measurement taken by the scanner head while the scanner head was operating in the zig-zag pattern; and determining one or more quality parameters related to the pattern of coating material disposed on the surface of the sheet by comparing the measurements taken in the zig-zag pattern to the coating profile generated for the sheet. Additionally or alternatively, the non-transitory computer readable medium may further include wherein the instructions for taking measurements at each of the bin locations as the sheet is moving past the scanner head in a machine direction MD includes instructions for controlling the positioning of the scanner head in order to maintain the positioning of the scanner head at each of the bin locations for a predetermined time period.

### BRIEF DESCRIPTION OF THE DRAWINGS

For a more complete understanding of this disclosure, reference is now made to the following description, taken in conjunction with the accompanying drawings. The figures, discussed below, and the various embodiments used to describe the principles of the present invention in this patent document are by way of illustration only, and should not be construed in any way to limit the scope of the invention. Those skilled in the art will understand that the principles of the invention may be implemented in any type of suitably arranged device or system.
FIG. 1 illustrates a schematic diagram of a processing system for applying coatings to sheet stock, in accordance with various embodiments.
FIG. 2A illustrates an end view, in cross-section, of a sheet of flat stock having a coating applied to a top surface of the sheet, in accordance with various embodiments.
FIG. 2B illustrates an end view, in cross-section, of a sheet of flat stock having a coating applied to a top surface and to a bottom surface of the sheet, in accordance with various embodiments.
FIG. 3 is a block diagram illustrating a top view of a sheet processing system, in accordance with various embodiments.
FIG. 4A is a block diagram illustrating a top view of a sheet processing system, in accordance with various embodiments.
FIG. 4B is a block diagram illustrating a top view of a sheet processing system, in accordance with various embodiments.
FIG. 5 is a block diagram illustrating a top view of a sheet processing system, in accordance with various embodiments.
FIG. 6 is a block diagram illustrating a top view of a sheet processing system, in accordance with various embodiments.
FIG. 7 is a flowchart illustrating a method, in accordance with various embodiments.
FIG 8 is a block diagram illustrating computer system, in accordance with various embodiments.

### DETAILED DESCRIPTION

Profile measurements in flat sheet manufacturing processes is done by scanner sensors moving back and forth in a cross-wise CD direction over a moving sheet in the machine direction MD. For example in lithium battery manufacturing, a coating process in the production lines involves different patterns of a coating material applied to a sheet of flat stock in a particular pattern, such as strip coating that involves one or more gaps between strips (strip gap, uncoated area along the MD direction) or patches of coating that involves patch gaps between patches (patch gap, uncoated area along the CD direction), as well.

Not only is the uniformity of the applied coating an important quality parameter, but also the proper placement of the patterning of the application of the coating materials, including the inclusion of the gaps in the proper locations, are additional quality control parameters that must be addressed as part of the product processing of these types of sheets. Detecting the position of uncoated gap edges between coated sections of the sheet is challenging, especially in the case of patch coating process. Since the traditional scanning operation is not coordinated with the coating pattern, scanning measurement profiles will have patch coating gaps appear at variable positions. This makes measurement and control of the coating process very difficult. It is very important and challenging to accurately detect the position of coated sections of the sheet and differentiate it from the uncoated (gap) sections. This is required for proper quality control and statistic calculations. Confirming the proper location(s) of the strip gaps between longitudinal oriented strips of coating material is a relatively easy problem for strip coating processes since the gaps appear at the same CD position for every scan. Patch coating process monitoring and control is more challenging because not only do the coated and uncoated sections need to be differentiated from each other, but there is a need to differentiate between whether the uncoated section is a strip gap or a patch gap. Current gap detection algorithms that depend on measurement rate of change can be very unreliable in this case, especially when the measurement is noisy.

As such, one of the main problems to be solved is to differentiate between strip gaps and patch gaps in the coating patterns disposed on the sheet. This can be done by performing several single-point measurements in machine direction, referred to as a start-up procedure, before starting the measurement scans as part of the regular scanning operations.

As further described below, embodiments of the start-up procedure start with the scanner head of a scanner apparatus positioned so as to take measurements along an uncoated edge of the sheet for a small period to determine a baseline of the uncoated MD measurement average. The scanner head then moves, bin location by bin location, and performs the same single point measurement at each bin location. The measurement time at each position, i.e., each bin location, must be long enough to measure over at least a plurality of coating patches. Comparing the measurements of each bin location with the baseline measurements will determine whether the bin is located in the coated area or an uncoated area of the sheet.

In various embodiments, if the difference between the average measurement at a given bin location and the uncoated baseline measurement is negligible, it is an indication of strip gap. The CD bin/position of the transitions into and out of this gap will be stored as strip gap edges. After all the single point measurements have been completed, a scan is performed through the gathered single point measurements and average in CD direction this time is calculated. Then this same process is utilized to determine the patch gaps. The MD position of the transitions to and out of this cross-wise gap will be stored as patch gap edges. In cases where there is no uncoated front edge, the first uncoated area detected will be considered as the baseline for the uncoated measured value.

Once the start-up procedure has been completed, and a coating profile has been generated by the start-up procedure, processing during normal scanning operations may begin. As part of processing during normal scanning operations, the scanner head may be used to scan the sheet, for example in a zig-zap pattern, while the sheet is moving past the scanner head in a machine direction MD. Because the system has knowledge of CD bin/position of all strip gap edges and the MD dimension of the coating patch and the patch gap, this information can be used to perform one or more quality control measurements on the sheet. With this extra information, the end-of-scan edge/gap detection algorithms can be made very reliable and differentiate between the patch and the strip gaps as further described below, including:
1. After a measurement scan is completed, run an edge detection algorithm on the measured profile to identify all edges.
2. Run the edge detection algorithm again from the middle of each strip gap identified in the start-up procedure, in both CD directions - going from uncoated area to the coated area on both edges of the gap - to locate the strip edges. Since the measurement is relatively noise-free in the uncoated gap area, this edge detection will be much more reliable and accurate. Validate the new edges detected comparing with the CD bin/position of the strip edges determined in the start-up procedure. Allow a tolerance to account for any sheet wander.
3. Verify MD positions of all other edges found in step 1 to identify any patch edges. Note that every scan profile is associated with a MD position array and a timestamp array that represent MD position and measurement timestamp of each CD bin. A couple of checks can be made to verify whether the detected edge is in fact a patch edge.
   a. Using the scan velocity and line speed, validate the time and MD distance to/from the strip edges determined in the previous step.
   b. Verify the MD distance from previously identified MD edges.
   c. Discard all remaining edges as noise.
4. Once the patch gaps are identified, re-run the edge detection from the middle of the patch gap in both directions to accurately determine the patch edges.

This process will reliably and accurately identify all strip and patch edges/gaps in the measurement profile. Sensor measurements in the identified gaps can be represented using two invalid values (for example +1 million and -1 million) to differentiate between the two types of gaps for higher level processing. Identification of the coating pattern allows for automatically adjusting the scan path to optimally scan across the coated area. For example, scanning can be scheduled to start at the end of a patch gap and the scan speed can be adjusted based on the line speed to scan diagonally across a patch. If the patch dimension is too small, turn-arounds can be scheduled to occur at the patch gaps to get optimal coverage and consistent patch gap locations in the profile. Another benefit is the improved visual representation of the scan path over the coating pattern. The MD position profile display can be updated using the detected strip/patch gap edges to show the actual scan path over the coating pattern.

Embodiments include additional start-up procedures that may be considered "abbreviated start-up procedures," as they can be performed in a shorter period of time compared to the start-up procedure described above. In one embodiment, the start-up procedure includes performing one normal forward and reverse scan across the sheet, and perform single point measurements only around the edges identified in this scan. Since any scan is guaranteed to go over all strip edges, this process will identify all strip edges much faster. Once all strip edges are determined, perform single point scan at a position outside the strip gaps to determine the MD positions of the patch edges. Another embodiment of a start-up procedure includes running a number of normal scans across the sheet, recording CD bin/position and MD position of all edges detected through an edge detection algorithm. Continue scanning until convergence of CD bin/position of the strip edges and MD position of the patch edges is obtained, and all false edge detections are statistically eliminated. Both above mentioned techniques can be considered as faster alternatives to the bin-by-bin start-up procedure. Rest of the processing to identify strip/patch edges during normal operation remains the same as explained above.

Embodiments, as further described below, include procedures that can reliably and accurately identify the strip and patch gaps in the coating measurement applications in flat sheet processing. This process can be run once before the measurement scan begins, similar to a standardization procedure. The benefits of using this procedure can be summarized as following:
- Improved Cross directional/Machine Directional controls.
- Improved calculation of measurement statistics.
- Scan path optimization based on the coating pattern detected.
- Improved visual presentation of the scan path over the coating pattern.
- No additional equipment required to perform these procedures, resulting in reduced cost.

For at least these reasons, these procedures provide improvements to the technical field associated with process control and quality monitoring for processes involving sheet stock production for sheet materials that includes coating(s) disposed on one or more surfaces of the sheet. The generation of a set of baseline data using the set up procedures as described herein, and then the utilization of this baseline data for process and quality control of processes including the manufacturing of sheet stock with coating disposed on one or more surfaces of the sheet stock, provide a practical application of the procedures as disclosed herein.

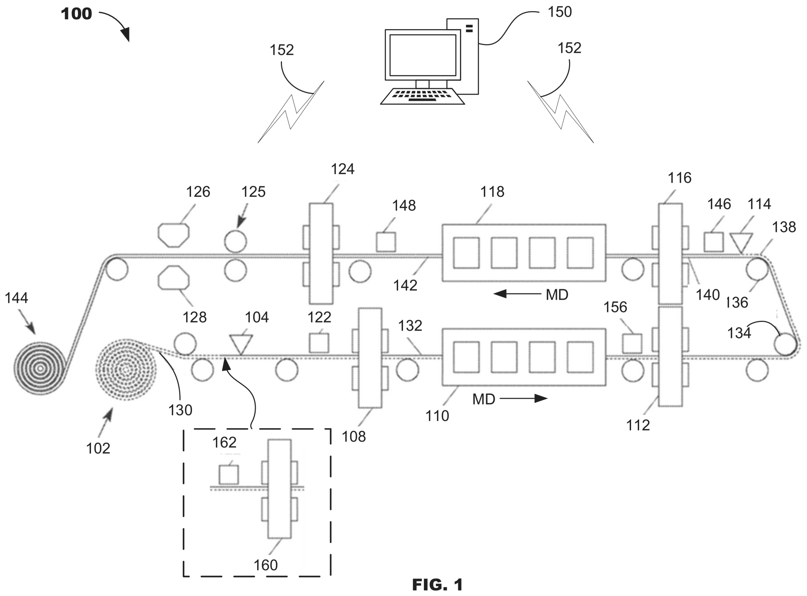

FIG. 1 illustrates a schematic diagram of a processing system 100 for applying coatings to sheet stock, in accordance with various embodiments. The particular process illustrated in FIG. 1, and as further described below, includes processing system (system) 100 configured to perform a process for coating a metal web or sheet stock that is used in fabricating electrodes for lithium-ion electrochemical cells and batteries, in accordance with various embodiments.

For making anodes, the electrode coating includes anodic active materials such as graphite and, for making cathodes, the electrode coating includes cathodic active materials such as a lithium metal oxide. Electrodes include a current collector metal foil that is coated on one or both sides of the foil with electrode slurry that can also include carbon black, binder and solvent. After the electrode slurry is applied on a side of foil, the wet coated foil is heated in a dryer to extract the solvent to leave a solid layer of electrode material which adheres to the metal foil. Copper foil is a preferred anode current collector material and aluminum foil is a preferred cathode current collector material. The foil is typically 9 to micrometers (µm) thick, and the electrode coating ranges from 75 to 400 µm in thickness on one or both sides of the foil so that a double-side coated electrode can have a caliper of up to 850 µm with most being typically about 250 µm thick. While some examples are described for this particular manufacture, the present innovations are not limited to battery manufacturing and may be used for other sheet manufacturing processes.

As shown in FIG. 1, system 100 includes roll 102 comprising a roll of sheet 130, which is unwound by an unwinder and supplies a continuous sheet of metal web or sheet 130 that is coated on the top (or first) surface with a layer of electrode slurry by coater 104, which can comprise a tape casting coating device. The basis weight, thickness, and other characteristics of the sheet of metal web 130 from roll 102 are usually known. Tachometer 122 measures the line speed, and scanner apparatus 108 measures the basis weight, thickness, and/or other properties of the electrode slurry. The input from the tachometer can be used to compute the machine direction (MD) position of each portion of sheet 130, longitudinally, that is under measurement at scanner apparatus 108. As the scanner apparatus 108 scans across the sheet, the MD position of each cross-direction (CD) bin position located cross-wise along the width of sheet 130 will be recorded to create the MD position profile for the primary sensor. CD/MD offset corrections can be applied for additional sensors in the scanner head. An end-of-roll signal or another dedicated signal can be used to set the reference (zero') position for the MD position measurement.

Coater 104 includes actuators that control the doctor blade to regulate the amount of slurry that is extruded onto sheet 130. Dryer 110 removes excess solvents and cures the slurry that is on the moving coated sheet 132 to form an electrode layer on the sheet 132. Tachometer 156 measures the line speed in the machine direction MD, and scanner apparatus 112 measures one or more properties of the moving coated sheet exiting dryer 110. Thereafter, rolling supports 134 and 136 reverse the orientation of the moving sheet so that the second surface is now the uncoated top side of sheet 138, whereupon coater 114 applies a layer of electrode slurry on the top or second surface of the moving sheet 138. Tachometer 146 measures the line speed of sheet 138 in the machine direction MD, and properties of the now double-side coated sheet 140 are measured with scanner apparatus 116 before entering dryer 118. Tachometer 148 measures the line speed in the machine direction MD, and scanner apparatus 124 measures properties of the electrode layers on the first and second surfaces. After calendar 125, a rewinder takes up the double-side coated sheet 142 into roll 144.

In various embodiments, one or more of scanner apparatus 108, 112, 116, and 124 may be configured using one or more embodiments of the start-up procedures, as further described below, to determine a set of baseline values for baseline measurements for an uncoated portion of the sheet being processed, and to calibrate the scanner apparatus for the checking for the proper positioning of gaps, both longitudinal gaps between continuous strips of coating being applied in a continuous and parallel pattern along the longitudinal direction (length) of the sheet, as well as calibration for the cross-width gaps that occur as uncoated portions of the sheet in cross-wise strips that separate individual patches of coating being applied to the sheet. Once calibrated using one or more start-up procedures, one or more of scanner apparatus 108, 112, 116, and 124 may be operated to scan the patterns of coating applied to one or both sides of sheet 130, and to determine, based on the scanned data collected from the sheet as the sheet passes through the respective scanner, whether a pattern of coating is properly positioned on the sheet and/or if there is an issue with the property of the coating, such as basis weight of the coating, or a lack of coating, as applied to the areas of the sheet that are intended to have coating applied within those areas. In various embodiments, surface defects related to both the basis weight of the coating strips or patches, along with defects related to the positioning of the coatings and the gaps in the coating, may also be monitored by camera-based web inspection systems, such as cameras 126 and 128. Although the process as illustrated for system 100 is depicted as being continuous, it is understood that the various steps and attendant measurements can be performed in separately in discrete, discontinuous batch operations. For example, the roll 144 is subsequently subject to a slitting operation to form individual electrodes suitable for assembling into cells and batteries.

In various embodiments, one or more of scanner apparatus 108, 112, 116, and 124 are configured for operating in a transmissive mode. For example, in various embodiments one or more of scanner apparatus 108, 112, 116, and 124 may comprise a radiation source that directs a beam of radiation into a moving sheet, and includes a radiation receiver that detects radiation that is transmitted through the material positioned between the transmitter and the receiver. Sensors operating in the transmission mode are described, for instance, in U.S. Pat. Nos. 9,182,360, 8,527,212, 7,298,492 and US 2021103821173 and US 2021/0262776, which are incorporated herein by reference. Alternatively, the sensors can operate in the reflective mode. For instance, each sensor has an upper head housing both a radiation source and detector. Sensors operating in the reflective mode are described, for instance, in U.S. Pat. Nos. 9,182,360, 8,527,212, 7,298,492 and US2020/0096308, which are incorporated herein by reference. The sensors can also comprise a combination of reflective and transmissive sensors.

In various embodiments, a mappings and/or a graphical display of the scanner measurements may be divided into points or bins across the width of the sheet, wherein for example each bin can represent a predefined distance, such as but not limed to a distance of 5 millimeters (mm), in the cross-width dimension of the sheet. The data collected for each bin may be provided by a scanner apparatus, such as scanner apparatus 108, 112, 116, and 124, to a computer system, such as computer system 150, for further processing and/or for storing the collected data for later use.

In particular, the scanner apparatus 108, 112, 116, and/or 124 may perform binning of MD positions such that instances when the scanner head enters and exits in each of the user-defined bins, cross direction measurements regions (bins) are accurately timestamped. The tachometer counts values that fall within these timestamps, which are accumulated and averaged to generate a MD position of each such cross directional bins. Thereafter, the MD position of each bin of the sensor measurement profile is aggregated as an array and displayed as an MD position profile for each cross directional profile. Each sensor signal measuring a sheet property is also aggregated as an array and may be displayed as a cross direction profile.

Time-synchronization is particularly suited for coordinate MD position measurements in a production line. Time synchronizing multiple scanners in a production line allows the MD reference position synchronization signal to be wired to only one scanner. Time stamps of the synchronization signals are accurately measured by the scanner to which it is wired. These time stamps are transferred to other scanners using a conventional TCP/IP network. Since all scanners are time synchronized, the scanner receiving synchronization signal timestamp can accurately associate it with its local tachometer timestamps to establish the MD reference position.

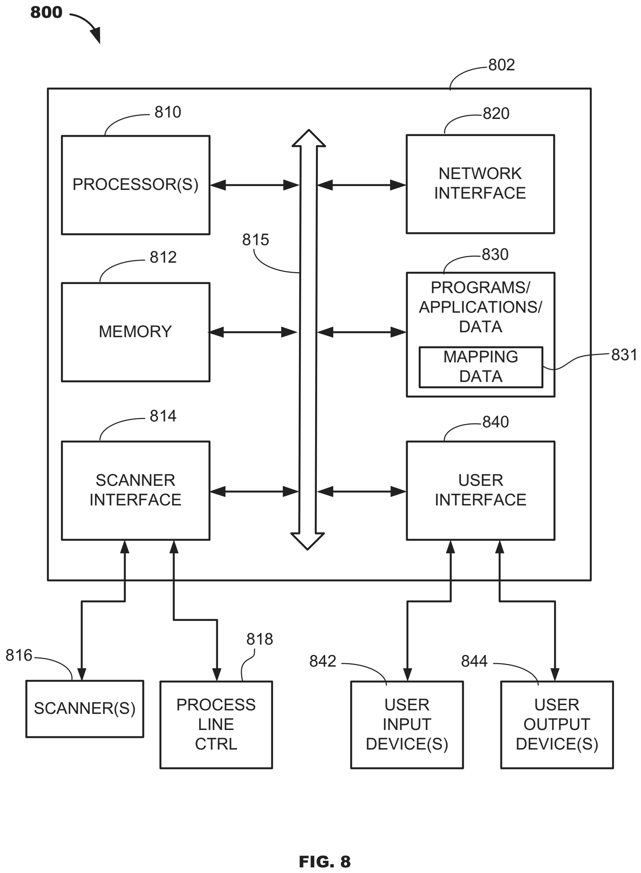

Computer system 150 is communicatively coupled to the devices included in processing system 100, as illustratively represented by lightning bolts 152. The coupling between computer system 150 and the devices of processing system 100 are not limited to any particular type of coupling, and in some embodiments comprise wired connections, wireless connections, and/or a combination of wired and wireless connections. In various embodiments, computer system 150 includes a configuration of computing devices, such as computer system 802 (FIG. 8), which includes computing circuity including one or more processors, one or more computer memory devices, the memory device(s) configured to store data and program instructions related to the operation of processing system 100. For example, the memory included in computer system 150 may include programming instructions for performing any of the methods for start-up procedures and/or for operating procedures related to measuring the basis weight of the coating layer(s) applied to the sheet being processed by system 100 using the scanner apparatus included in processing system 100. In addition, computer system 150 may include memory configured to store data, such as basis weight data measured by any of the scanners included in processing system 100, and may further include programming instructions for performing analysis of the basis weight data as part of recordation and/or quality control processes being provided in association with the manufacturing of the sheet at any intermediate stage of processing, and/or at the final stage of processing of the sheet, as performed by processing system 100.

Computer system 150 may include one or more user input devices, such as a computer keyboard or mouse, and/or a touchscreen monitor, which allows a user, such as a process technician or engineer, to provide inputs to computer system 150, for example to control the operation of the processing system 100 and/or to request an output of information related to the operation of processing system 100 and/or the status of the sheet being processed by processing system 100. Computer system 150 may include one or more output devices, such as a display device, computer monitor, and/or a printer, which are configured to provide outputs, such as visual displays and/or printed outputs, which provide information about the operation of processing system 100 and/or about one or more parameters or status of the products being produced by processing system 100.

Embodiments of certain battery manufacturing processes make use of dry coating techniques that involves dry coating materials combined with specialized binders. In such manufacturing processes, the dryer sections in these lines will be minimal, or replaced by a calendaring unit. However, the application of scanners to measure coating uniformity remains the same. Processing system 100 as in FIG. 1 in some embodiments illustrates a four scanner system, including scanners 108, 112, 116, and 124. Embodiments of an alternative battery processing line consists of a five scanner system, which may include a fifth scanner 160 located before the coater 104 and associated with tachometer 162. Scanner 160 may be configured to measure properties of bare foil of sheet 130 passing through scanner 160, while tachometer 162 provides sheet speed information about the speed of sheet 130 in the machine direction MD as the sheet passes through scanner 160.

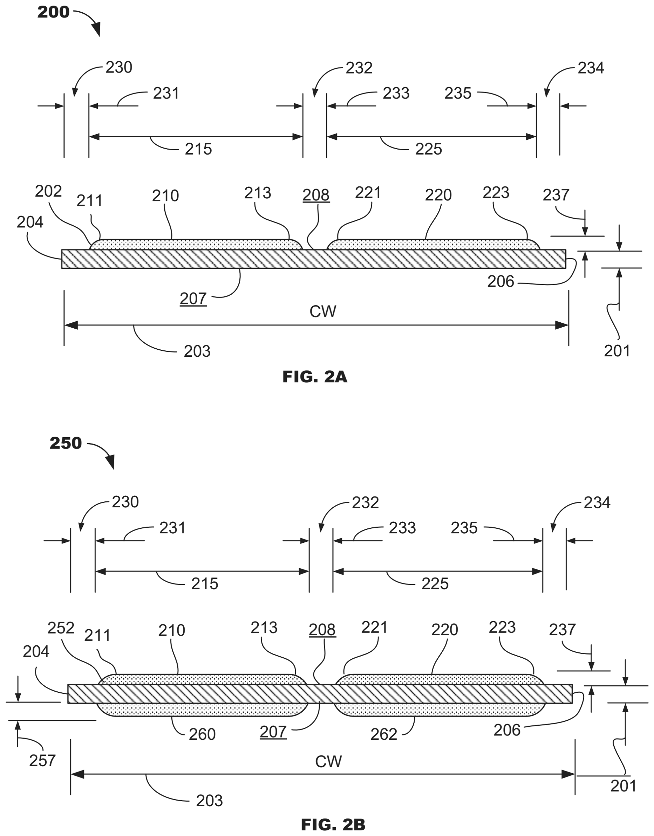

FIG. 2A illustrates an end view 200, in cross-section, of a sheet 202 of flat stock having a coating applied to a top surface 208 of the sheet, in accordance with various embodiments. In various embodiments, sheet 202 is a portion of a sheet that has been processed, at least to some point, by processing system 100 (FIG. 1), to apply individual strips of coating 210, 220, to a top surface 208 of sheet 202. As shown in FIG. 2A, sheet 202 is rectangular in shape in cross-section, and includes top surface 208 extending from a first edge 204 of sheet 202 to a second edge 206 of the sheet, wherein second edge 206 is on an opposite side of sheet 202 from first edge 204, and across a width dimension (CW) 203. Sheet 202 includes a bottom surface 207 extending parallel to and opposite top surface 208, and separated from top surface 208 by a thickness dimension 201.

As shown in FIG. 2A, first coating strip 210 of coating material is positioned on top surface 208 of sheet 202, in contact with top surface 208, and extending away from top surface 208 for a coating thickness having a thickness dimension 237. A first edge 211 of first coating strip 210 is positioned on top surface 208 and away from first edge 204 of sheet 202, providing a gap 230, wherein within gap 230 the top surface 208 of the sheet is uncoated, and wherein gap 230 has a cross-width dimension 231. First coating strip 210 extends in the cross-wise direction to a second edge 213 of the coating, forming first coating strip 210 for a distance defined by dimension 215. Second edge 213 of first coating strip 210 is located at one side of gap 232, wherein gap 232 includes an uncoated portion of the surface 208 of sheet 202, and extends between second edge 213 of the first strip to a first edge 221 of the second coating strip 220 for a cross-width dimension 233. The second coating strip 220 extends along top surface 208 from the first edge 221 of the second coating strip to a second edge 223 of the second coating strip 220 for a width dimension 225 in cross-section. The second edge 223 of the second coating strip 220 is located on top surface 208 adjacent to gap 234. Gap 234 extends along top surface 208 between second edge 223 of the second coating strip 220 and the second edge 206 of sheet 202, forming an uncoated portion of the top surface 208 of the sheet 202 along gap 234 and having a cross-width dimension 235.

With regards to a length dimension of sheet 202, first coating strip 210, and second coating strip 220, as described above with respect to sheet 130 (FIG. 1), may be a continuous length sheet having a length, i.e., looking into and out of the drawing sheet in FIG. 2A, that is several meters, for example from 500 to 2000 meters or more, in length. The length dimension will vary depending on the manufacturing site and/or the production setup used for processing the sheet. In various embodiments, the longitudinal length of sheet 202 may be defined by the length of the roll of material providing sheet 202, such as roll 102 (FIG. 1), and may be referred to as the "longitudinal length" or "roll length" for the sheet in this disclosure. In various embodiments, the length dimension for first coating strip 210 and second coating strip 220 may correspond to the length of sheet 202, i.e., each of the coating strips may extend in the length dimension for all or most of the length dimension of sheet 202, in some embodiments as continuous and unbroken strips in the length direction. In various embodiments, patches of coating material forming the first coating strip 210 and the second coating strip 220 may include cross-sectional gaps in the coating material, which form additional uncoated strips of top surface 208 running across the sheet from first edge 204 to second edge 206 of sheet 202, the cross-sectional gaps formed at regular and predefined intervals along the length dimension of the sheet 202, thereby dividing each of the first coating strip 210 and the second coating strip 220 into what are referred to a "coating patches" or simply "patches" throughout this disclosure.

In various embodiments, a scanner apparatus, such as any of scanner apparatus 106, 112, 116, 124, and/or 160 of system 100 (FIG. 1), may be used to scan sheet 202 as the sheet moves through the scanner in a machine direction (MD), and while moving the scanner head of the scanner apparatus in a cross-wise direction across the top side of sheet 202 in order to take measurements related to the first coating strip 210 and the second coating strip 220 using any of the start-up procedures and normal operational procedures as further described below. In various embodiments, the measurements taken by the scanner apparatus when the scanner head of the apparatus as positioned over any of the uncoated portions of top surface 208, such as at gaps 230, 232, and/or 234, may be used as baseline measurements. Measurements taken by the scanner apparatus when the scanner head of the apparatus is positioned over any of the coated portions of the sheet 202, such as over the first coating strip 210 and/or over the second coating strip 220, include basis weight measurement of the coating layers, which may be calibrated against baseline measurements to determine whether properties of the coating layer at the measured location is within acceptable parameter levels, and/or to determine whether the positioning of the gaps, such as gaps 230, 232, and 234, and/or the location of the edges 211, 213 of the first coating strip 210 and the edges 221, 223 of the second coating strip 220 are properly located relative to their location in cross-section along top surface 208. In addition, embodiments of the scanning procure may include determining if the edges of any patches formed in the first coating strip 210 and in the second coating strip 220, when present, are located in the proper positions in cross-section along top surface 208 of sheet 202.

Although shown in FIG. 2A as comprising two strips of coating material, embodiments of sheet 202 may include a single strip of coating material, or more than two strips of coating material extending in continuous strip along the longitudinal length of the sheet. In addition, any number of these coating strips may be further divided into a plurality of patches, each patch extending for some predefined longitudinal length of the sheet, and separated from adjacent patches in the longitudinal direction by a respective set of patch gaps extending in a cross-wise direction across the width of the sheet and positioned between the patches, thereby separating the patches into separated blocks of coating material. Non-limiting examples of typical ranges of values for dimensions related to sheet 202 include the following. These ranges of values are only provided as examples, wherein the values and ranges of values for these parameters may vary, and include values within and/or outside of these ranges, depending on various factors such as the manufacturing site being used, manufacturing processes being employed, and product design variations.

A roll length of unwound foil roll may have a longitudinal length in a range from~500 to 2000 meters, inclusive, this could vary between different manufacturing sites and production setups. Embodiments of a minimum and maximum thickness of foil sheet comprising copper is in a range from 6 to 10 microns, inclusive for sheet comprising copper, and in range 10 to 15 microns, inclusive, for sheet comprising aluminum. Variations in sheet thicknesses depends on the battery power needs and battery cell design. Embodiments of a minimum and maximum cross-width dimension of a sheet: may be in a range from 250 to 2000 millimeters, inclusive. A width of a sheet in a cross-wise dimensions may depends on the site type where the sheet is being processed, and/or in some embodiments whether the process is being performed as a pilot process or as a part of a regular production process. Embodiments of a minimum and maximum width of the coated strips may be in a range from 50 to 250 millimeters. The width of the coating strips may vary depending on the design and manufacturer for which the sheet is being produced. Embodiments of minimum and maximum gap width between strips may be in a range from 0.5 to 5 millimeters, inclusive. The width of the strip gaps in some embodiments depends on the energy density of the electrodes where the sheet is going to be used. Embodiments of minimum and maximum edge width (edge gap width) on two sides of the sheet and center gaps and/or gaps between strips of coating may be in a range from 5 to 10 millimeters, inclusive and varies based on the design. Embodiments of minimum and maximum thickness of the coating may range from 50 to 100 microns, inclusive, wherein common thicker electrodes up to 150 microns are possible in some embodiments. Both sides added typically total a thickness 100 to 200 microns, inclusive, to the sheet in various embodiments.

FIG. 2B illustrates an end view 250, in cross-section, of a sheet 252 of flat stock having a coating applied to a top surface and to a bottom surface of the sheet, in accordance with various embodiments. The sheet 252 in FIG. 2B includes the same top surface 208 having first coating strip 210 and second coating strip 220 disposed on the top surface, and includes gaps 230, 232, and 234 where no coating is disposed on these areas of top surface 208 in a same or similar manner as described above with respect to sheet 202 and FIG. 2A.

Sheet 252 in FIG. 2B differs from sheet 202 (FIG. 2A) in that in addition to first coating strip 210 and second coating strip 220, sheet 252 includes a third coating strip 260 and a fourth coating strip 262. Third coating strip 260 is disposed onto the bottom surface 207 of sheet 252, and extends away from bottom surface 207 over the same cross-width dimension 215 as first coating strip 210, and having a thickness dimension 257. Fourth coating strip 262 is disposed onto the bottom surface 207 of sheet 252, and extends away from bottom surface 207 over the same cross-width dimension 225 as second coating strip 220, while also having a thickness dimension 257, generally equal to the thickness of the third coating strip 260. As such, the third coating strip 260 and the fourth coating strip 262 may be "mirror images" of the first coating strip 210 and the second coating strip 220, respectively, but arranged along the bottom surface 207 of sheet 252. With regards to the length dimensions of the third coating strip 260 and the fourth coating strip 262, each of these coating strip may be formed in a same configuration as their counterpart coating strips formed on the top surface 208 of sheet 252, and have a thickness dimension 257 the same as thickness dimension 237, and which may comprise continuous strips of coating material, or in the alternative patches of coating material, corresponding to a same patterning of the coating material disposed on the top surface 208.

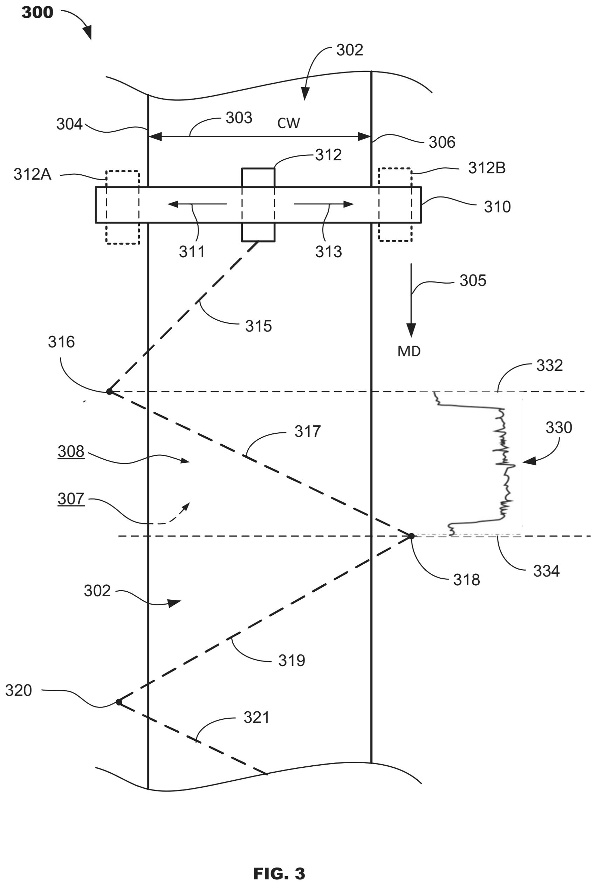

FIG. 3 is a block diagram illustrating a top view of a sheet processing system 300, in accordance with various embodiments. Sheet processing system (system) 300 includes a scanner frame 310 including a scanner head 312. The scanner frame 310 is positioned at a stationary point, and encircles, either entirely or at least partially, in a cross-width (CW) direction a sheet 302 of flat stock material. Sheet 302 can comprise a flat sheet of material, comprising a material such as but not limited to a metal or a metal compound, having a width dimension 303 that extends from a first edge 304, (the left-hand edge in FIG. 3), to a second edge 306, (the right-hand edge in FIG. 3), wherein the first edge 304 and the second edge 306 are parallel to one another along the continuous length dimension of sheet 302, thereby maintaining a same cross-width dimension 303 along the entirety of the length dimension of the sheet 302. In various embodiments, the length dimension of sheet 302 is defined as comprising a continuous length of material, which may comprise several feet or meters of sheet length, and which is configured to be moved in a machine direction (MD), as illustratively represented by arrow 305, past the stationary position where scanner frame 310 and scanner head 312 are positioned. The material forming sheet 302 comprises a flat planar top surface 308, and a flat planar bottom surface 307 opposite from and in a plane parallel to top surface 308, the bottom surface 307 separated from the top surface 308 throughout the sheet 302 by a consistent thickness dimension of the sheet 302. For example, sheet 302 may have a consistent thickness for the sheet in any location between first edge 304 and second edge 306, and maintained along the length dimension of the sheet for its entirety.

In embodiments of system 300, a first portion of scanner head 312 may be held in various locations above top surface 308 of sheet 302. In addition, in various embodiments of system 300 scanner head 312 also includes a second portion of scanner head 312 that is held in various locations below bottom surface 307, the various locations corresponding to the current position of the first portion of the scanner head. As shown in FIG. 3, the scanner frame 310 extends beyond both the first edge 304 and beyond the second edge 306 of sheet 302 in the cross-width direction. Further, scanner head 312, which may comprise both a first portion and a second portion, is configured to move in the cross-wise direction 303, along the scanner frame 310, as illustratively represented by arrows 311 and 313. As such, scanner head 312 may be operated to be moved to a position shown as 312A, wherein the scanner head is positioned off to the side of edge 304 and beyond the top surface 308. The scanner head 312 may also be operated to move to a position shown as 312B, wherein the scanner head is positioned off to the side of edge 306 and beyond top surface 308. Because of this range of cross-width movement capability of the scanner head 312, the scanner head is able to be positioned at any location extending in the cross-wise direction across sheet 302, and configured to make scanner measurement readings using the first portion of the scanner head 312 as a signal transmitter directing a signal into and through sheet 302, which may be received on the opposite side (in this example bottom surface 307) of sheet 302 in order to measure a property of the material, such as a basis weight measurement, at the location where the scanner head 312 was positioned at the time the measurement was taken. Measurements taken by scanner head 312 may be transmitted as data signals to another device, such as computer system 150 (FIG. 1) or computer system 802 (FIG. 8), where the measurement data may be stored and/or further processed.

In addition to the cross directional movements of scanner head 312, sheet 302 will also be moving in a machine direction MD (arrow 305,) during the time that the scanner head 312 is operating to make scanner measurements. A combination of the cross-wise movement of the scanner head 312 is a back and forth motion extending between first edge 304 and second edge 306, in combination with the movement of sheet 302 in the machine direction MD while the scanner head 312 is making scanner measurements allows for a zig-zag pattern of locations along and across sheet 302 to be placed between the first portion and second portion of the scanner head 312, and thus allows measurements, such as baseline measurements, to be measured at a series of locations along and across sheet 302 in the zig-zag pattern.

By way of non-limiting example, starting with the scanner head 312 in the position shown in FIG. 3 at approximately the center of sheet 302 in the cross-wise dimension, the scanner head can be moved in the direction indicated by arrow 311 while sheet 302 is moved in the machine direction MD indicated by arrow 305, resulting in scanner head 312 tracing a first diagonal pattern across sheet 302 as indicated by dashed line 315. Upon reaching for example the end of the travel for the scanner head 312 in the direction indicated by arrow 311, the scanner head 312 may be located at the position shown as 312A relative to scanner frame 310, and may be positioned at location 316, which extends the scanner head beyond first edge 304 of sheet 302 in this example.

As sheet 302 continues to move in the machine direction 305, scanner head 312 may be actuated to move, at some predestined travel speed, in the direction indicated by arrow 313. The combination of the movement of the scanner head 312 in the direction of arrow 313 and the movement of sheet 302 in the machine direction MD (arrow 305), causes the scanner head 312 to trace a pattern across sheet 302 as indicated by dashed line 317. Upon reaching for example the end of the travel for the scanner head 312 in the direction indicated by arrow 313, the scanner head 312 may be located at the position shown as 312B relative to scanner frame 310, and may be positioned at location 318, which extends the scanner head beyond second edge 306 of sheet 302 in this example. Scanner head 312 may be operated to take baseline measurements, at some predefined rate or time interval as the scanner head moves between locations 316 and 318 along the path indicated by dashed line 317, and including taking baseline measurements at locations 316 and/or at location 318, wherein the scanner head does not include any portion of sheet 302 positioned between the first portion and the second portion of the scanner head.

As shown in FIG. 3, waveform 330 represents a non-limiting example of baseline measurements that were taking using scanner head 312 as the scanner head moved along the path indicated by dashed line 317, including measurements taken at location 316 at time 332 and at location 318 at time 334 when no portion of sheet 302 was positioned between the first portion and the second portion of scanner head 312. The measurements by scanner head 312 for example at locations 316 and/or 318 may be used as calibration measurements in some embodiments. In addition, as shown in FIG. 3 there is no coating applied to the top surface 308, and in this particular embodiment to the bottom surface 307 of sheet 302. Measurements using the scanner head 312 in portions of the sheet 302 may be performed for example at a point in the process, such as at scanner apparatus 160 (system 100, FIG. 1), prior to the application of any coating to the sheet in order to verify the operation of the scanner head, for example to set the operating speed of the scanner head back and forth cross-wise within the scanner frame 310, and/or to set and/or adjust the speed of travel of sheet 302 in het machine direction MD, as illustratively represented by arrow 305. In various embodiments, performing an operation such as the one shown in FIG. 3 on a portion of sheet 302 that does not include any coating may be performed to measure and/or to confirm the consistency of one or more measurable parameters of the sheet (dimension between top surface 308 and bottom surface 307) across and along the dimensions of sheet 302. In addition, these measures made across uncoated portion of sheet 302 may be required to generate and determine baseline measurements of the sheet alone for comparison to measurements of other portions of the sheet that include one or more layers of coating material that are applied to sheet 302.

From location 318, the pattern of zig-zigs traced by the scanner head 312 relative to sheet 302 may continue, wherein in this example scanner head 312 may be actuated to move in the cross-wise direction of arrow 311 relative to scanner frame 310 while sheet 302 continues to move in the machine direction MD (arrow 305), resulted in the scanner head 312 tracing a pattern indicated by dashed line 319. Upon arriving at location 320, the cross-wise direction of movement of scanner head 312 may again be reversed to move in the direction indicated by arrow 313, while sheet 302 continues to move in the machine direction MD (arrow 305), thereby traveling along a path indicated by dashed line 321. Again, any measurements made by scanner head 312 during any of these movements may be transmitted, as data signal, to a computer system, as mentioned above, for storage and/or for further processing.

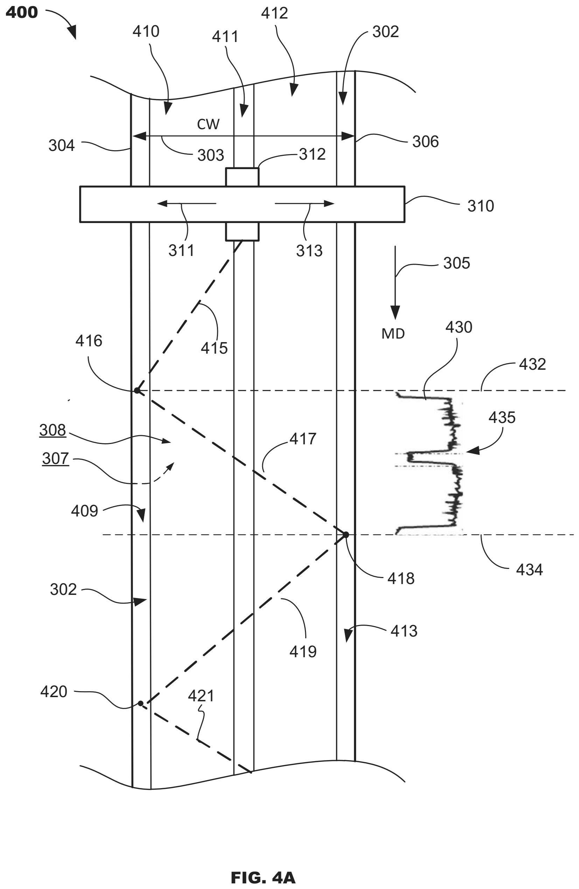

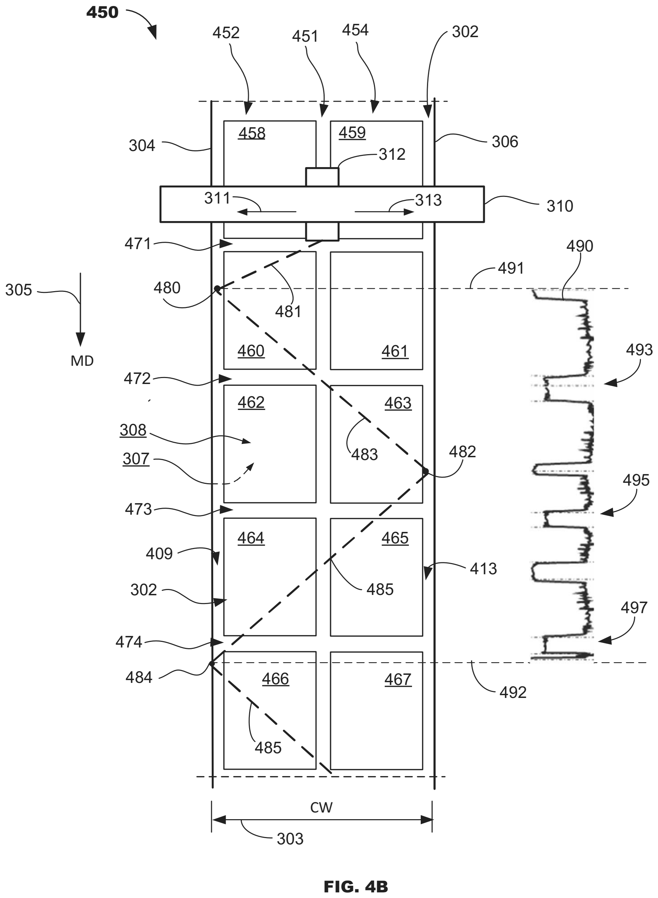

At some point in time portions of sheet 302 that do have a coating, such strips or patches of coating material applied to one or both sided of sheet 302, may be provided at the location where scanner frame 310 and scanner head 312 are located and are operating. Examples of operations that include taking measurements though portions of sheet 302 that do include coating material disposed on one or more of the top and/or bottom surfaces of the sheet are illustrated and further described below with respect to FIGS. 4A and 4B.

FIG. 4A is a block diagram illustrating a top view of a sheet processing system 400, in accordance with various embodiments. Sheet processing system (system) 400 includes many of the same features included in sheet processing system 300 as described above with respect to FIG. 3, including scanner frame 310 including a scanner head 312 positioned at a stationary point, and encircling either entirely or at least partially, in a cross-width (CW) direction a sheet 302 of flat stock material. Sheet 302 can comprise a flat sheet of material, comprising a material such as but not limited to a metal or a metal compound, having a width dimensions 303 that extends from a first edge 304, (the left-hand edge in FIG. 4A), to a second edge 306, (the right-hand edge in FIG. 4A), wherein the first edge 304 and the second edge 306 are parallel to one another along the continuous length dimension of sheet 302, thereby maintaining a same cross-width dimension 303 along the entirety of the length dimension of the sheet 302.

In various embodiments, the length dimension of sheet 302 is defined as comprising a continues length of material, which may comprise several feet or meters of sheet length, and which is configured to be moved in the MD, as illustratively represented by arrow 305, past the stationary position where scanner frame 310 and scanner head 312 are positioned. The material forming sheet 302 comprises a flat planar top surface 308, and a flat planar bottom surface 307 opposite from and in a plane parallel to top surface 308, the bottom surface 307 separated from the top surface 308 throughout the sheet 302 by a consistent thickness dimension of the sheet 302.

Sheet 302 in processing system 400 differs from sheet 302 in processing system 300 (FIG. 3) in that sheet 302 in processing system 400 includes the addition of coating strips 410 and 412 extending in a longitudinal direction along top surface 308 of the sheet. In various embodiments, the coating patterns may be disposed on the top surface 308 only, and may be the same as or similar to the arrangement of coating strips as illustrated and described above with respect to FIG. 2A. In various embodiments, the second set of coating strips may have been applied to the bottom surface 307 of sheet 302, and in some embodiments may be a mirror image of the coating pattern shown as coating strips 410 and 412 in FIG 4A. As shown in FIG. 4A, sheet 302 includes a gap 409 comprising an uncoated strip extends longitudinally along first edge 304. A first coating strip 410 extends longitudinally along sheet 302 adjacent and parallel to gap 409. A gap 411 comprising an uncoated portion of sheet 302 extends longitudinally and continuously along the length dimension of sheet 302, and divides the first coating strip 410 from the second coating strip 412, which also extends longitudinally and continuously along the length dimension of sheet 302. A gap 413 comprising an uncoated strip extends longitudinally along second edge 306 of sheet 302. As such, for any line taken in cross-section and perpendicular to the length dimension of the sheet 302, the line will cross, in a left to right direction, gap 409, the first coating strip 410, center gap 411, second coating strip 412, and then gap 413. If coating strips are also applied to the bottom surface 307 of sheet 302, for example in a corresponding mirror image pattern to first coating strip 410 and second coating strip 412, sheet 302 in cross-section would appear like the cross-sectional view as illustrated and described above with respect to FIG. 2B.

Referring back to FIG. 4A, processing system 400 can be configured to perform a scanning operations on sheet 402 in a manner the same as or similar to that described above with respect to processing system 300. For example, as shown in FIG. 4, a zig-zag scanning pattern along sheet 402 can be executed by having sheet 402 moving in a machine direction MD, as illustratively represented by arrow 305, while the scanner head 312 is actuated to move back and forth in a cross-wise direction, as illustratively represented by arrows 311 and 313. In one embodiment, the zig-zag pattern may include moving from a center position at gap 411 to location 416 along diagonal path represented by dashed line 415, from location 416 to location 418 along the diagonal path represented by dashed line 417, and then from location 418 to location 420 along the diagonal path represented by dashed line 419. A zig-zag pattern of scanning may continue past location 420 in the machine direction MD, as illustratively represented by dashed line 421. Scanner measurement readings may be taken by scanner head 312, at some predefined rate or time interval, as sheet 402 passes through and past the scanner head 312, in the pattern depicted in FIG. 4A. In various embodiments, the scanner measurement reading include measurements of basis weight of the sheet and coating material included in areas of sheet 302 along the path of travel of scanner head 312 that include first coating strip 410 and second coating strip 412.

In the process of taking scanner measurements along the path indicted by dashed line 415, scanner measurements would include basis weight measurements taken along a diagonal path across first coating strip 410, and ending at location 416, which would include scanner measurements taken at the uncoated portion of sheet 302 within gap 409. In the process of taking scanner measurements along the path indicted by dashed line 417, the scanner measurements would include scanner measurements taken along a path starting at gap 409, extending across first coating strip 410 to center gap 411, then extending across second coating strip 412 to location 418, which is located within the uncoated portion of sheet 302 at gap 413. As such, when scanner head 312 is positioned over portions of sheet 302 that include first coating strip 410 or second coating strip 412, the scanner measurements would include basis weight measurements of both the coating strips, as well as scanner measurements taken in the uncoated portions of sheet 302. These scanner measurements may also include the added basis weight measurement of a corresponding coated layer or strips, if present, on the bottom surface 307 of sheet 302. For scanner measurements taken while the scanner head 312 is positioned at locations that are uncoated, including gap 409, center gap 411, and gap 413, the scanner measurements taken would include measurements of a property of the sheet 302 alone.

In the process of taking scanner measurements along the path indicated by dashed line 419, the scanner measurements will have a similar pattern as for the scanner measurements taken along the path indicated by dashed line 417, but in the reverse order. The path indicated by dashed line 419 starts at the uncoated portion of sheet 302 at location 418 in gap 413, extends across second coating strip 412, then across center gap 411 to the first coating strip 410, and ending in the uncoated portion of the sheet 302 at location 420 positioned within gap 409. Again, the zig-zag pattern of scanning and taking scanner measurements may be continued along the length dimension of sheet 302, for example until the end portion of the sheet is reached.

Graphical line 430 is included in FIG. 4A, and represents the variation in the scanner measurements that have been captured by scanner head 312 as the scanner head moved from location 416 at time 432, to location 418 at time 434. As shown by graphical line 430, an inflection point 435 in the scanner measurement values that may have been captured by scanner head 312 during times then the scanner head was positioned over portions of sheet 302 that includes gap 411. Portions of graphical line 430 adjacent to inflection point 435 represent values for scanner measurements, such as basis weight measurements, that were taken while the scanner head 312 was positioned over portions of sheet 302 that include first coating strip 410 and second coating strip 412.

By comparing the scanner measurements of graphical line 430 to the baseline measurements for a sheet 302 having strips of coating material and as determined using any of the start-up procedures as described in this disclosure, a determination can be made as to whether the a parameter, such as basis weight of the coating within both the first coating strip 410 and within the second coating strip 412 are within an acceptable range. In addition, a determination can be made as to whether the positioning of the edges for first coating strip 410 and second coating strip 412, as well as the edges for gaps 409, 411, and 413, are located in the respective proper positions relative to the surface(s) and edges 304 and 306 of sheet 302.

Using the comparison between the basis weight measured as shown for processing system 400 in FIG. 4A, and the baseline measurements taken using any of the start-up methods and techniques as described herein, a more accurate assessment of the position of the gaps, both strip gaps and patch gaps when present, can be made, thereby providing a level of quality control monitoring not available in previous processing systems, and utilizing existing equipment, thereby limiting or eliminating any extra hardware costs associated with the implementation of these methods and techniques.

FIG. 4B is a block diagram illustrating a top view of a sheet processing system 450, in accordance with various embodiments. Sheet processing system (system) 450 includes many of the same features included in sheet processing system 400 as described above with respect to FIG. 4A, including scanner body frame 310 including a scanner head 312 positioned at a stationary point, and encircling either entirely or at least partially in a CW direction, a sheet 302 of flat stock material. Sheet 302 can comprise a flat sheet of material, comprising a material such as but not limited to a metal or a metal compound, having a width dimension 303 that extends from a first edge 304, (the left-hand edge in FIG. 4B), to a second edge 306, (the right-hand edge in FIG. 4B), wherein the first edge 304 and the second edge 306 are parallel to one another along the continuous length dimension of sheet 302, thereby maintaining a same cross-width dimension 303 along the entirety of the length dimension of the sheet 302. In various embodiments, the length dimension of sheet 302 is defined as comprising a continues length of material, which may comprise several feet or meters of sheet length, and which is configured to be moved in a machine direction (MD), as illustratively represented by arrow 305, past the stationary position where scanner frame 310 and scanner head 312 are positioned. The material forming sheet 302 comprises a flat planar top surface 308, and a flat planar bottom surface 307 opposite from and in a plane parallel to top surface 308, the bottom surface 307 separated from the top surface 308 throughout the sheet 302 by a consistent thickness dimension of the sheet 302. For example, sheet 302 may have a thickness dimension providing a consistent thickness for the sheet in any location between first edge 304 and second edge 306, and maintained along the length dimension of the sheet for its entirety.

Sheet 302 in processing system 450 differs from sheet 302 in processing system 400 (FIG. 4A) in that sheet 302 in processing system 450 includes columns of coating material that are divided into individual patches, as opposed to continuous strips of coating material extending in the longitudinal dimension of the sheet. For example, as shown in FIG. 4B sheet 302 includes a first column 452 of patches 458, 460, 462, 464, and 466, arranged to extend in a line of patches extending in the MD and adjacent to strip gap 409, and a second column 454 of patches 459, 461, 463, 465, and 467, arranged to extend in the machine direction MD and adjacent to strip gap 413 and second edge 306. Each of the patches in first column 452 is adjacent to a single one of the patches in second column 454 in the cross-wise direction, wherein center gap 451 extends in the machine direction and between each of the adjacent patches located next to each other in the cross-wise direction. In addition to the strip gap 409, center gap 451, and strip gap 413, the layout of coating patches as provided on sheet 302 in processing system 450 includes patch gaps comprising uncoated strips of the top surface 308 of sheet 302 that extend in the cross-wise direction, and divides each pair of the coating patches from a pair of coating patches that are positioned longitudinally away from each other in the MD.

For example and as shown in FIG. 4B, a patch gap 471 extends in the cross-wise direction, and separates patches 458 and 459 from patches 460 and 461, respectively, in the machine direction MD by a strip of an uncoated portion of top surface 308 of sheet 302. A patch gap 472 extends in the cross-wise direction, and separates patches 460 and 461 from patches 462 and 463, respectively, in the machine direction MD by a strip of an uncoated portion of top surface 308 of sheet 302. A patch gap 473 extends in the cross-wise direction, and separates patches 462 and 463 from patches 464 and 465, respectively, in the machine direction MD by a strip of an uncoated portion of top surface 308 of sheet 302. A patch gap 474 extends in the cross-wise direction, and separates patches 464 and 465 from patches 466 and 467, respectively, in the machine direction MD by a strip of an uncoated portion of top surface 308 of sheet 302.

This pattern of cross-wise extending patch gaps separating pairs of coating patches arranged in columns in the machine direction MD from one another may be repeated for the entirety or nearly the entirety of the roll length of sheet 302. In embodiments that also include patch coatings applied to the bottom surface 307 of sheet 302, the patch gaps may be provided on the bottom surface in an arrangement and configuration corresponding to the arrangement and configuration of the patch gaps as provided on top surface 308 of sheet 302.

Scanning patterns for scanner head 312 may be configured for processing system 450 in a similar manner as described above with respect to processing system 400 and FIG. 4A. For example, as shown in FIG. 4B processing system 450 may be configured to actuate the scanner head 312 back and forth in a cross-wise direction while sheet 302 is moving past the scanner head in a machine direction MD. The resulting zig-zag scanning pattern of travel made by the scanner head 312 may result in a scanning path starting at location of scanner head 312 as shown in FIG. 4B positioned over center gap 451, and proceeding to location 480 as illustrated by dashed line 481, then extending along the diagonal path indicated by dashed line 483 to location 482. From location 482, scanner head 312 may travel along a diagonal path indicated by dashed line 485 to arrive at location 484. Additional scanning paths may be continued from location 484 in the machine direction MD, as indicted by dashed line 485.

When taking scanner measurements along the path indicated by dashed line 481, the scanner head may take measurements within the uncoated portion of sheet 302 within patch gap 471, followed by taking measurements across coating patch 460, before arriving at the uncoated portion of sheet 302 at location 480 included in gap 409, where additional measurements may be taken. When moving from location 480 to location 482 along the diagonal path indicated by dashed line 483, measurements taken by scanner head 312 may include measurements taken in the uncoated portion of sheet 302 in gap 409, followed by measurements taken across a coated portion of sheet 302 included in patch 460, followed by measurements taken across an uncoated portion of sheet 302 that includes center gap 451 and patch gap 472. The scanner measurements may then continue along a coated portion of sheet 302 included in patch 463, until arriving at an uncoated portion of sheet 302 at location 418 and gap 413, where addition measurements may be taken. Any of the measurements may comprise measurements taken to determine a basis weight for the areas of sheet 302 that include coating material located where the measurement was taken.

For example, when moving from location 482 to location 484 along the diagonal path indicated by dashed line 485, measurements taken by scanner head 312 may include measurements in the uncoated portion of sheet 302 in gap 413, followed by basis weight measurements taken across a coated portion of sheet 302 included in patch 463, following by measurements taken across an uncoated portion of sheet 302 that includes patch gap 473, followed by basis weight measurements taken across the coated portion of patch 465, followed by measurements taken across the uncoated portion of sheet 302 at center gap 451. The scanner measurements may then continue along a coated portion of sheet 302 included in patch 464, then extending across a first uncoated portion of sheet 302 included in patch gap 474, then across an adjoining uncoated portion of sheet 302 included in gap 409 before arriving at location 420, which is located within gap 409, where addition measurements may be taken.

Graphical line 490 is included in FIG. 4B, and represents the variation in the measurements that have been captured by scanner head 312 as the scanner head moved from location 480 at time 491, to location 482 and then to location 484 at time 492. As shown by graphical line 490, inflection points 493, 495, and 497 correspond to measurement values captured by scanner head 312 during times then the scanner head was positioned over patch gap 472, patch gap 473, and patch gap 474, respectively. Portions of graphical line 490 adjacent to these inflection points represent values for measurements, including basis weight measurements, taken while the scanner head 312 was positioned over the coating material included in one of patches 460, 463, 465, and 464 that were passed over by the scanner head between time 491 and 492.

By comparing the measurements of graphical line 490 to the baseline measurements for a sheet 302 having a same patch coating pattern as the one illustrated in FIG. 4B, and as determined using any of the start-up procedures as described in this disclosure, a determination can be made as to whether the properties of coating, such as the basis weight of the coating material within each of the patches, including patches 460, 463, 465 and 464, are within an acceptable range. In addition, a determination can be made as to whether the positioning of the edges for patches themselves, as well as the edges for strip gap 409, center gap 451, and strip 413, as well as the edges for each of the patch gas, including patch gaps 471, 472, 472, and 474, are located in the respective proper positions relative to the surface(s) and edges 304 and 306 of sheet 302 and relative to each other.

Using the comparison between the scanner measured values as shown for processing system 450 in FIG. 4B, and the baseline measurements taken using any of the start-up procedures as described herein, a more accurate assessment of the position of the gaps, both strip gaps and patch gaps, can be made, thereby providing a level of quality control monitoring not available in previous processing systems, and utilizing existing equipment, thereby limiting or eliminating any extra hardware costs associated with the implementation of these methods and techniques.

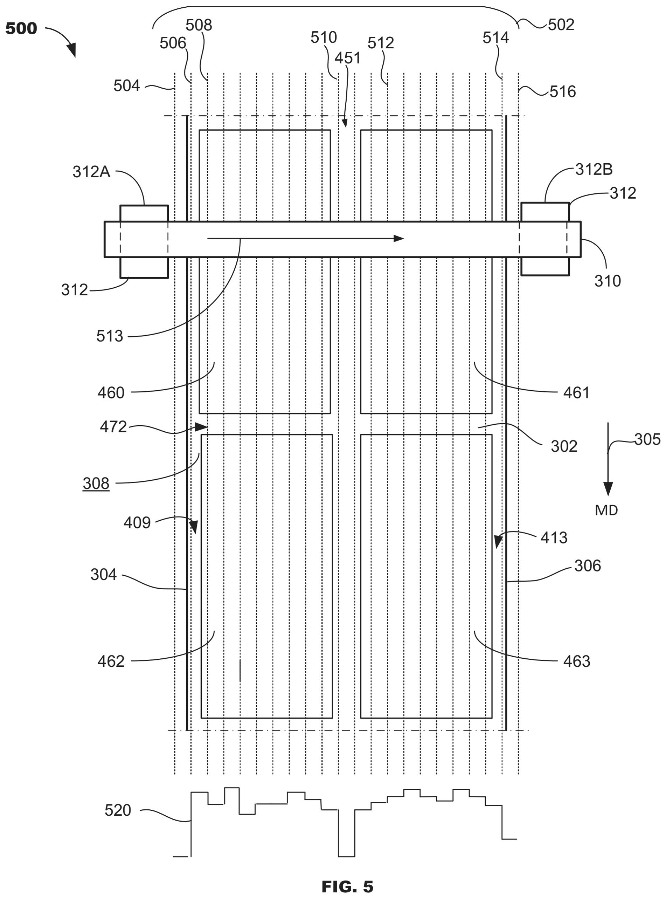

FIG. 5 is a block diagram illustrating a top view of a sheet processing system 500, in accordance with various embodiments. Processing system 500 is a non-limiting example of a system configured to perform a start-up procedure intended to establish baseline measurements that can then be used, once established using the start-up procedure, for quality control purposes when performing scanning procedures on sheet 302 as part a normal operating procedures. As shown in FIG. 5, a sheet 302 extends in a cross-wise direction from first edge 304 to second edge 306 and having a roll length in the length dimension being moved in the machine direction MD, illustratively represented by arrow 305, past the location of scanner frame 310 including a scanner head 312, illustratively represented at a first location 312A that is beyond first edge 304. Scanner head 312 is configured to move in the cross-wise direction indicated by arrow 513, until scanner head 312 arrives at a second location, illustratively represented in FIG. 5 as location 312B, while sheet 302 is moving in the machine direction MD, illustratively represented by arrow 305.

As shown in FIG. 5, processing system 500 includes a plurality of predefined bin locations, as illustratively represented by dashed lines generally indicated by bracket 502. The bin locations extends longitudinally along sheet 302 parallel to edges 304 and 306, and generally parallel to the machine direction MD of movement of sheet 302, as indicated by arrow 305. The cross-wise location assigned to each individual bin location remain constant relative to the first edge 304 and the second edge 306 for that particular bin, and may extend for the entirety of the roll length of the sheet 302. As shown in FIG. 5, sheet 302 includes a serial of patches comprising coating material disposed on the top surface 308 of sheet 302, the patches illustrated represented as patches 460, 461 in one row of patches extending in the cross-wise direction, and patches 462 and 463 in a second row extending in the cross-wise direction and down longitudinally for patches 460 and 461 in the machine direction MD. It would be understood that additional rows of patches may be disposed in a continuously repeated pattern along the length dimension of sheet 302 for some length of the sheet, including the entirety of the roll length of the sheet.

As part of a start-up procedure, processing system 500 may be operated as follows in order to establish a baseline measurement values for each of the bin locations existing across sheet 302. Starting with the scanner head at the location indicated as 312A, the scanner head is moved in the direction indicated by arrow 513 until the scanner head arrives at the location of the first bin location 504. As shown in FIG. 5, bin location 504 is positioned beyond edge 306, and therefore scanner measurements taken by scanner head 312 at bin location 504 will not include any portion of sheet 302. Upon arriving at the first bin location 504, scanner head 312 will remain at that position for some predefined time period, and take measurements at some predefined rate or time interval as sheet 302 moves past the scanner head, thereby collecting a plurality of scanner measurements for the first bin location over a length of sheet 302. The accumulation of these scanner measurements can be stored and further processed as start-up measurements for first bin location 504. Because the first bin location does not include any portion of sheet 302, i.e., extends only along outside of sheet 302, the measurements taken by scanner head 312 at the first bin location may represent a calibration or base set of measurement values for locations where no portion of sheet 302 was present in the location were the measurements were taken.

At the end of the predefined time period for remaining at the first bin location, scanner head 312 will be actuated to move to the second bin location 506. Upon arriving at the second bin location 506, scanner head 312 will remain at that position for some predefined time period, and take scanner measurements at some predefined rate or time interval as sheet 302 moves past the scanner head, thereby collecting a plurality of scanner measurements for the second bin location over a length of sheet 302. In various embodiments, the length of time that the scanner head 312 remaining at the second bin location 506 can be the same length of time that the scanner head was positioned at the first bin location 504, or a different length of time. The accumulation of these scanner measurements taken at second bin location 506 can be stored and further processed as start-up measurements for second bin location 506. Because the second bin location includes portions of sheet 302 that includes only uncoated surfaces of the sheet, the measurements taken by scanner head 312 at the second bin location 306 may represent a calibration or baseline set of measurement values for uncoated portions of sheet 302.

At the end of the predefined time period for remaining at the second bin location, scanner head 312 will be actuated to move to the third bin location 508. Upon arriving at the third bin location 508, scanner head 312 will remain at that position for some predefined time period, and take measurements at some predefined rate or time interval as sheet 302 moves past the scanner head, thereby collecting a plurality of scanner measurements for the third bin location over a length of sheet 302. In various embodiments, the length of time that the scanner head 312 remaining at the third bin location 508 is the same length of time that the scanner head was positioned at the first bin location 504 and/or at the second bin location 506, or may be a different predefined length of time. The accumulation of the scanner measurements taken at third bin location 508 can be stored and further processed as start-up measurements for third bin location 508. As shown in FIG. 5, the third, bin location 508 includes portions of sheet 302 that have coating material disposed on the sheet, such as areas where third bin location 508 crosses patch 460 and patch 462. While positioned at third bin location 508 and taking scanner measurements while scanner head 312 is positioned over a portion of the sheet 302 that include coating material, measurements, such as basis weight measurements, regarding for these coated areas of the sheet may be accumulated.

In addition, portions of the third bin location 508 also cross over areas, such as patch gap 472, were no coating material is disposed on the surface of sheet 302. As sheet 302 is moving past the scanner head 312 while the scanner head 312 remains positioned at third bin location 508, different scanner measurement values will occur for areas where coating material is disposed on the sheet compared to areas where no coating material exists, such as lengthwise across patch gap 472. By mapping these differences in scanner measurement values to the specific locations along the sheet 302 in the lengthwise dimension, for example using the known speed of movement of the sheet 302 in the machine direction MD, and/or other positioning indicators indicative of the longitudinal position along the sheet, the expected positions of the patch gaps, including the patch edge locations for each of the patch gaps, can be determined based on the variations in the basis weight measurements accumulated by the scanner head 312 while positioned at the third bin location 508.

As part of the start-up procedure that system 500 is configured to perform, the scanner head 312 can continues to move incrementally from one bin location to the next adjacent bin location in the direction indicated by arrow 513, spending a predetermined amount of time at each bin location and taking scanner measurements while positioned at each bin location as sheet 302 moves past the scanner head in the machine direction MD. The amount of time spent at each bin location, and the number of measurements taken at each bin location depends on a number of factors, including speed of the sheet in the machine direction MD, width of a patch gap in the machine direction, and the ratio of sheet weight (or thickness) to a total coted weight (or thickness). In varies embodiments, the time spent by the scanner head at each location is a time period long enough for the scanner head to take measurements over at least two patches of coating material, in some embodiments over at least three patches of coating material. This pattern of movement by the scanner head 312 from bin location to an adjacent bin location can be repeated until the scanner head arrives at the location 312B as shown in FIG. 5. At each of the bin locations, the scanner head 312 will remain at that bin location for some predetermined time, and take measurements at that location for that predetermined time, accumulate the measurements taken for that particular bin location, and then move on to the next adjacent bin location.

Some of the bin locations, such as bin location 510, will extend along center gap 451 in the machine direction MD, extending longitudinally between adjacent patches in a same row, for example between patches 460 and 461, and therefore will include measurements take along only portions of sheet 302 that do not include coating material. Other bins, using bin location 512 as an example, will again extending through areas of sheet that include coating material, and other areas, for example patch 461 and 463, that do not include coating material, in a similar manner as described above for bin location 508. A graphical representation of an example of scanner measurements taken for each bin location is provided as graphical line 530 extending across the bottom of FIG. 5, which represents a relative value for the accumulated measurements determined for each bin provided directly below the associated bin location.

The measurement data accumulated and processed as part of the start-up procedure as illustrated in FIG. 5 may then be used to generate a coating profile comprising baseline measurements that can be used to determine if the basis weight of the coating, and the positioning of coating material and the gaps, are correct or within acceptable parameter levels for example when performing monitoring using scanner head 312 and for example using any of the zig-zag pattern of scanner measurements during normal operating procedures being performed on any sheet of flat stock that includes coating patterns on one or both sides of the sheet. For example, when a zig-zag pattern of scanning a sheet, such as sheet 302, as part of a normal production operation is being performed, and the zig-zag pattern passes through a given bin location, the scanner measurements taken by the scanner head at that time and at that particular bin location can be compared to the accumulated measurements taken during the start-up procedure for that same bin location. Based on the comparison, a determination can be made as to whether the basis weight of the coating , and/or the lack of coating if that is what was expected for that location and at that point in time relative of the movement to the sheet in the machine direction, complies with the coating pattern determined by the coating profile, thereby accounting for the proper or improper location of an occurrence of one or more of the patch gaps.

As the zig-zag pattern of movement of scanner head 312 places the scanner head at a width-wise location across sheet 302 that is included in a particular bin, and a scanner measurement is made by the scanner head while at the location of that bin, the resulting measurement taken may be compared to the determined baseline measurement for the bin, taking into account the occurrence of patch gaps, if present. The measured value taken by the scanner head can then be classified as acceptable, or for example as being out of tolerance, in which case the system can, by mapping the measured value to that bin and also to a particular location lengthwise along the sheet 302, mark and flag a potentially defective section of the coated sheet.

If measured values taken during normal scanning operations do not comply with the expected value for that measurement based on the coating profile, in some embodiments process parameters, such as the positioning and or the basis weight for the application of the coating to the sheet may need to be adjusted, for example as part of a closed loop operation. In various embodiments, if the measured values obtained during normal scanning operations do not comply with the expected value for the measured portion of the sheet, that portion of the sheet may need to be flagged as potentially a defective portion of the sheet, and any further processing associated with defective portions of a sheet may need to be implemented.

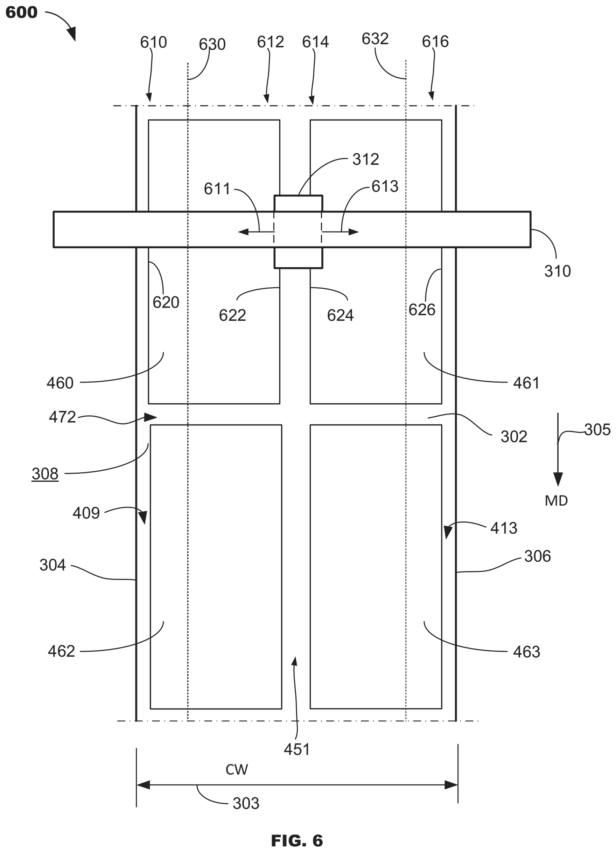

FIG. 6 is a block diagram illustrating a top view of a sheet processing system 600, in accordance with various embodiments. Processing system 600 is a non-limiting example of a system configured to perform a start-up procedure intended to establish baseline measurements that can then be used, once established using the start-up procedure, for quality control purposes when performing scanning procedures on sheet 302 as part a normal operating procedure. As shown in FIG. 6, sheet 302 extends in a cross-wise direction from first edge 304 to second edge 306 and having a roll length in the machine direction MD, illustratively represented by arrow 305, as sheet 302 is moved past the location of scanner frame 310 including a scanner head 312. Scanner head 312 is configured to move in the cross-wise direction indicated by arrows 611 and 613 while sheet 302 is moving in the machine direction MD.

Processing system 600 may be configured to provide a start-up scanning procedure utilizing a limited number of bin locations, thereby providing a start-up procedure that can be performed in a shorter amount to time as compared to the start-up procedure illustrated and described above with respect to processing system 500 and FIG. 5. In various embodiments, processing system 600 is configured to actuate scanner head 312 in a single pass across sheet 302 in the cross-wise CW direction 303, across the width of sheet 302 from first edge 304 to second edge 306 of the sheet, while taking scanner measurements across the width of the sheet. By moving across the entirety of the sheet 302, the path of the scanner head 312 will cross over each of the strip edges formed by strip gap 409, center gap 451, and strip gap 413 formed by the coating patches. For example, the scanning width-wise measurements taken by scanner head 312 can be used to detect cross-wise positioning of strip edge 620, as generally indicated by arrow 610, to detect the cross-wise positioning of strip edge 622 as generally indicated by arrow 612, to detect the cross-wise positioning of strip edge 624 as generally indicated by arrow 614, and to detect the cross-wise positioning of strip edge 626 as generally indicated by arrow 616. In various embodiments, system 600 may be configured to make one or more additional passes across the width 303 of sheet 302 to confirm the cross-wise location of these strip edges 620, 622, 624, and 626.

With the cross-wise location of each of the strip edges identified, processing system 600 may be configured to take a plurality of scanner measurements around each of the strip edges, the plurality of scanner measurements further processed to generate a baseline value for each of the strip edges. In addition, processing system 600 may also be configured to take a plurality of scanner measurements at one or more locations away from the strip edges and along bin locations that cross over, longitudinally, areas of the sheet that include patches of coating material. For example, processing system 600 may be configured to take a plurality of scanner measurements at a bin location indicated by dashed line 630, which crosses over at least both of patches 460 and 462 in a longitudinal direction along sheet 302. In various embodiments, the scanner measurements include measuring a basis weight for the area of sheet 302 where the scanner head 312 makes the measurement. Using the scanner measurements and MD position measurements taken along bin location 630, the positioning and width of patch gap 472 may also be determined. The number of patches that may be included in the scanner measurements taken to determine the location of patch gaps is not limited to two patches, and may include any addition number of patches located downstream in the machine direction MD from patch 462.

In addition to taking scanner measurements at bin location 630, processing system 600 may also be configured to take a plurality of scanner measurements and MD position measurements at one or more additional locations away from the strip edges and along one or more bin locations that cross over, longitudinally, areas of the sheet that include patches of coating material. For example, processing system 600 may be configured to take a plurality of scanner measurements at a bin location indicated by dashed line 632, which crosses over at least both of patches 461 and 463 in a longitudinal direction along sheet 302. Using the scanner measurements and MD position measurements taken along bin location 632, the positioning and width of patch gap 472 may also be determined and/or confirmed. Again, the number of patches that may be included in the measurements taken to determine the location of patch gaps is not limited to two patches, and may include any addition number of patches located downstream in the machine direction MD from patch 463.

The measure data accumulated and processed as part of the start-up procedure as illustrated in FIG. 6 may then be used as a set of baseline measurements for example to use generate a coating profile. The coating profile may in turn be used as a comparison basis to determine if a basis weight of the coating and/or the positioning of coating material and the strip and patch gaps, are correct and/or within acceptable parameter levels, for example when performing monitoring using scanner head 312 and for example using any of the zig-zag pattern of measurements during normal operating procedures being performed on any sheet of flat stock that includes coating patterns on one or both sides of the sheet.

For example, when a zig-zag pattern of scanning a sheet, such as sheet 302, as part of a normal scanning operation is being performed, and the zig-zag pattern passes through a given bin location, the scanner measurement take by the scanner head at that time and at that particular bin location can be compared to the accumulated measurements taken during the start-up procedure for that same bin location, and based on the comparison, a determination can be made as to whether the basis weight of the coating, or lack of coating if that is what was expected for that location and at that point in time relate of the movement to the sheet in the machine direction, are within the acceptable ranges of values.

If the measured value during normal scanning operations does not comply with the expected value for that measurement, in some embodiments process parameters, such as the positioning and/or the basis weight for the application of the coating to the sheet may need to be adjusted, for example as part of a closed loop operation. In various embodiments, if the measured value obtained during normal scanning operations does not comply with the expected value for the measured portion of the sheet, that portion of the sheet may need to be flagged as potentially a defective portion of the sheet, and any further processes associated with the defective portion(s) of a sheet may need to be implemented.

The start-up procedure as described above with respect to processing system 600 and FIG. 6 is advantageous in that by reducing and/or limiting the total number of bin locations that need to be scanned in order to establish the baseline measurements, the start-up procedure can be performed in a shorter time period as compared to for example the start-up procedure described above with respect to processing system 500 and FIG. 5. The start-up procedure for processing system 600 may be used for example when starting a new roll of sheet stock material into a processing system, such as system 100 (FIG. 1), wherein baseline data using a more extensive scanning procedure, such as described for processing system 500 (FIG. 5), has already been performed and the baseline values are established, but wherein the abbreviated start-up procedure as described for processing system 600 is used as a check to assure that new roll of sheet material comprises a same coating profile and layout as was previously being processed by the processing system.

In a still more abbreviated start-up procedure, embodiments of processing system 600 may be configured to run a number of normal scans across the sheet, recording CD bin/position and MD position of all edges detected through an edge detection algorithm. The start-up process then includes continuous scanning until convergence of CD bin/position of the strip edges and MD position of the patch edges are obtained, and all false edge detections are statistically eliminated. Once completion of this start-up procedure, the determined edge positions can be used as baseline values for a coating profile that can then be used for quality control monitoring when performing normal scanning operations as described above.

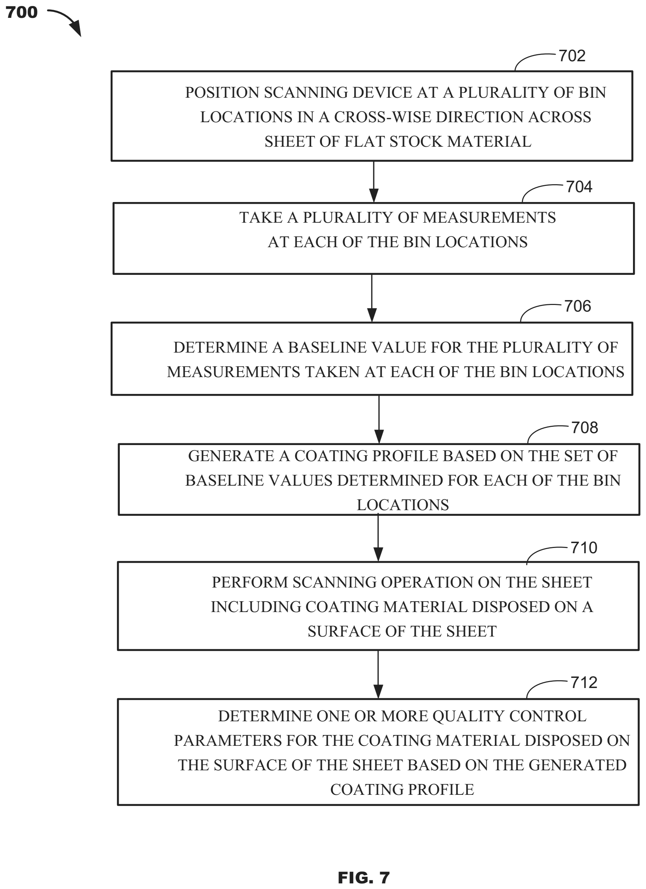

FIG. 7 is a flowchart illustrating a method 700, in accordance with various embodiments. Embodiments of method 700 may be performed by a processing system, such as processing system 100 as illustrated and described above with respect to FIG. 1. Embodiments of method 700 may be performed by a scanner apparatus, such a scanner apparatus comprising a scanner frame 310 and a scanner head 312 performing scanning operations on a sheet of flat stock material, such as sheet 302 as described above, which includes having a coating material disposed on at least one surface, such as a top surface and/or a bottom surface of the sheet.

Embodiments of method 700 include positioning a scanner head at a plurality of bin locations in a cross-wise direction across a sheet of flat stock (block 702). Positioning a scanner head at a plurality of bin locations may include positioned the scanner head at each of a plurality of adjacent bin locations in a sequence, as illustrated and described above with respect to processing system 500 and FIG. 5. Positioning a scanner head at a plurality of bin locations may include positioned the scanner head at each of a selected number of bin locations at predetermined locations width-wise across the sheet, as illustrated and described above with respect to processing system 600 and FIG. 6, such as at bin locations that extend through a slot gap longitudinally along the length of the sheet, and also at selected bin locations that cross over a column of patches of coating material positioned downstream from one another in the machine direction MD along the length of the sheet.

Embodiments of method 700 include taking a plurality of scanner measurements at each of the bin locations (block 704). Taking a plurality of scanner measurement at each of the bin locations may comprise using any configuration of bin locations as described herein, for example but not limited to taking scanner measurements at a series of adjacent bin location as described above with respect to processing system 500 and FIG. 5. Taking a plurality of scanner measurement at each of the bin locations may comprise taking scanner measurements around the strip edge gaps, and then over a selected number of bin locations away from the strip edge gaps as described above with respect to processing system 600 and FIG. 6. In various embodiments, the scanner measurements include basis weight measurements measuring a weight per unit area, such as grams per square meter, to determine a baseline value for uncoated areas of the sheet and a basis weight for area of the sheet having coating material disposed on one or both of a top and bottom surface of the sheet.

Embodiments of method 700 include determining a baseline value of the plurality of measurements taken at each of the bin locations (block 706). In various embodiments, determining a baseline value for the measurements taken for a given bin location comprises summing the total number of values of the scanner measurements taken at the given bin location, and dividing the summed total value by the number of scanner measurements taken at the given bin location.

Embodiments of method 700 include generating a coating profile based on the set of baseline values determined for each of the bin locations, (block 708). In various embodiments, generating a coating profile comprises mapping the determined baseline value for each of the bin location to the respective bin location associated with that calculated baseline value. In various embodiments, generating a coating profile includes mapping the location of strip gaps relative to a first edge of the sheet and to a second edge of the sheet opposite the first edge. In various embodiments, generating a coating profile includes mapping the location of patch gaps relative to a longitudinal position in the machine direction MD along a roll length of the sheet.

Embodiments of method 700 include performing a scanning operation on the sheet having coating material disposed on the at least one surface of the sheet, (block 710). In various embodiments, performing the scanning operation includes scanning the sheet in a zig-zag pattern, as described above with respect to processing system 400 (FIG. 4A), and/or processing system 450 (FIG. 4B). In various embodiments, performing the scanning operation includes scanning positions in the cross-wide direction of the sheet that correspond to a bin locations included in the baseline values used to generate the coating profile. In various embodiments, performing the scanning operations comprises taking basis weight measurements of areas of the sheet using the scanner head as the scanner head moves over the sheet in a cross-wise direction while the sheet is moving past the scanner head in a machine direction.

Embodiments of method 700 include determining one or more quality control parameters for the coating material disposed on the surface of the sheet based on the generated coating profile, (block 712). In various embodiments, the one or more quality control parameters includes determining that a basis weight measured for an area of the sheet that includes coating material is within an acceptable range for coating basis weight. In various embodiments, the one or more quality control parameters include a determination as to whether a position of a strip edge determined as part of the operational scanning of the sheet is within an acceptable range for the position of the strip edge. In various embodiments, the one or more quality control parameters include a determination as to whether a position of a patch edge determined as part of the operational scanning of the sheet is within an acceptable range for the position of the patch edge. In various embodiments, the one or more quality control parameters include a determination as to whether a width in the machine direction MD of a patch edge extending width-wise across the sheet is within an acceptable range for the width of the patch edge.

FIG 8 is a block diagram 800 illustrating computer system 802, in accordance with various embodiments. Computer system 802 may be configured to provide any of the features and to perform any of the functions described in this disclosure related to scanning procedures, including any of the start-up procedures related to the scanning of flat sheet stock that include coating material applied to one or more of a top surface and a bottom surface of the sheet, as described in this disclosure. In some embodiments, computer system 802 is included or incorporated into computer system 150 (FIG. 1), and is configured to perform any of the functions and provide any of the features ascribed and/or attributable to computer system 150.

Referring back to FIG. 8, computer system 802 includes processor(s) 810, possibly including multiple processors, multiple cores, multiple nodes, and/or implementing multi-threading, etc., communicatively coupled to computer memory 812 by a bus system (bus) 815. Example types of processor(s) 810 include microprocessors, microcontrollers, digital signal processors, field programmable gate arrays, application specific integrated circuits, and discreet circuitry.

As shown in FIG. 8, memory 812 may be an example of storage devices that represent any structure(s) capable of storing and facilitating retrieval of information, such as data, program code, and/or other suitable information on a temporary or permanent basis. Memory 812 may represent a random access memory, or any other suitable volatile or non-volatile storage device(s). Memory 812 may include short-term memory, and may contain one or more components or devices supporting longer-term storage of data, such as a ready only memory, hard drive, flash memory, or optical disc.

Memory 812 may include additional data and software modules that may be executed by processor(s) 810 to provide any of the features and to perform any of the functions ascribed to the control of scanning procedures, as described in this disclosure. Additional programs and application may be stored, either in memory 812, or in additional memory storage 830. Additional memory storage may be communicatively coupled to bus 815, and include programming, data, and/or instructions, including scanning data related to measurements taken by a scanner apparatus, and associated with a scanned measurements taken from one or more sheets of flat stock material the includes coating material applied to one or more surfaces of the sheet(s),

Processor(s) 810 may be configured to execute any instructions stored in and/or provided by memory 812 and additional memory storage 830, in order to perform any of the functions and to provide any of the features of the various embodiments related to the scanning of sheets of flat stock, including data related to measurements taken as part of any of the start-up procedures as described in this disclosure, and any equivalents thereof.

As shown in FIG. 8, computer system 802 includes a network interface 820 that is communicatively coupled to bus 815, and therefore to processor(s) 810 and memory devices 812 and 830. The computer system 802 can communicate via transmissions to and/or from other devices (not specifically shown in FIG. 8), via the network interface 820 in accordance with a network protocol corresponding to the type of network interface, whether wired or wireless and depending upon the carrying medium. In addition, a communication or transmission can involve other layers of a communication protocol and or communication protocol suites (e.g., transmission control protocol, Internet Protocol, user datagram protocol, virtual private network protocols, etc.).

Embodiments of computer system 802 include scanner interface 814 communicatively coupled to bus 815. Scanner interface 814 may be configured to communicate messages to and from other devices in a processing system, such as but not limited to one or more scanners 816, and sensors and actuators included in the process line controller 818 configured to operate a processing system or line, such as but not limited to system 100 (FIG. 1), that includes scanner(s) 816 and is configured to perform the physical handling of the sheet stock being scanned using scanner(s) 816. In various embodiments, process line controller 818 is configured to operate the devices, such as conveyors and/or rollers, which control the speed of the sheet(s) in the machine direction MD as the sheets are being scanned using one or more of scanner(s) 816. In various embodiments, process line controller 818 is configured to send positional information, such as time stamps or other indications of the physical position longitudinally of a sheet as the sheet passes through a particular one of scanners(s) 816, thereby allowing the measurements taken by that particular scanner to be tied, for example at a later time, to a specific location longitudinally along the sheet being scanned.

Any measurements, such as basis weight measurements, that may be taken by scanner(s) 816 may also be transmitted from the scanner(s) 816 to the scanner interface 814. In some embodiments, scanner interface 814 performs some further processing on the data provided by the scanner(s) 816, such as mapping the received measurement data, such as basis weight measurements and baseline measurements, received from a scanner to a timestamp or other longitudinal location indictor received from process line controller 818, so that the scanner measurements can be mapped to the longitudinal locations of these measurements as made as the sheet stock was scanned by a particular one of scanner(s) 816. In various embodiments, scanner interface 814 is configured to provide scanning instructions to scanner(s) 816. For example, scanner interface 814 may output a trigger signal to one or more of scanner(s) 816 to have the scanner begin performing one of the start-up procedures as described herein.

Scanner 816 may in turn be configured to perform the requested start-up procedure, and as part of that start-up procedure, to provide data to the scanner interface 814, including scanner measurement data and data related to the location, such as a bin location, where the scanner measurements were taken. In various embodiments, scanner interface 814 is configured to communicate data received at the scanner interface to memory 812 and/or to programs 830 for storage, and/or to processor 810 for further processing. In various embodiments, scanner interface 814 is configured by programs included in memory 812, program 830, and/or based on instructions received from processor 810, to generate outputs to scanner(s) 816 and to process line controller 818 to trigger and/or to control the operations being performed by these devices. These instructions may include instructions and/or parameters values for controlling the operating speed of the control line in the machine direction MD, and for controlling both the direction and speed of movement of the scanner head in any of scanner(s) 816.

A user interface 840 including in computer system 802 may be configured to operate as an interface for providing communicative coupling between computer system 802 and one or more user input devices 842, as well as one or more output devices 844. User input devices 842 may include one or more devices such as a computer mouse, computer keyboard, voice recognition hardware and software, and/or other devices such as a touch screen, that allow a user to provide inputs to computer system 802. Output devices 844 may include one or more devices, such as a computer monitor and/ speaker(s), which are configured to provide output information, such as visual graphical displays and/or sounds, perceivable by a user such as a process control engineer or a technician. Output devices 844 may include other types of output devices, such as a printer. In various embodiments, the input devices 842 may be used to input information, such as scanner configurations, and other parameters related to the operation of the processor systems for scanning sheets of flat stock, such as but not limited to system 100 (FIG. 1). In various embodiments, graphical information and depictions related to the status and operation of the scanning processes and/or the scanner apparatus where computer system 802 is incorporated may be generated and displayed for example on a monitor or display provided as part of output devices 844 for use by a user, such as a process control engineer or technician, and for example as illustrated and described above with respect to FIG. 1 and system 100.

Any one of the previously described functionalities may be partially (or entirely) implemented in hardware and/or on the processor(s) 810. For example, the functionality may be implemented with an application specific integrated circuit, in logic implemented in the processor(s) 810, in a co-processor on a peripheral device or card, etc. Further, realizations may include fewer or additional components not illustrated in FIG. 8 (e.g., video cards, audio cards, additional network interfaces, peripheral devices, etc.). Although illustrated as being coupled to the bus 815, one or more of the memory and storage devices including in computer system 802 may be coupled directly to the processor(s) 810.

Although FIG. 8 illustrates one example of a computer system 802 supporting industrial process utilizing scanner apparatus, variations in the configuration of computer system 802 are possible. For example, various components in computer system 802 could be combined, further subdivided, or omitted and additional components could be added according to particular needs. Also, processor(s) 810 can come in a wide variety of configurations, and the configuration of computer system 802 as illustrated in FIG. 8 does not limit this disclosure to any particular configuration of computing devices.

While the aspects of the disclosure are described with reference to various implementations and exploitations, it will be understood that these aspects are illustrative, and that the scope of the claims is not limited to them. In general, techniques for controlling and regulating the operation of a process control system as described herein may be implemented with facilities consistent with any hardware system or hardware systems. Many variations, modifications, additions, and improvements are possible.

Plural instances may be provided for components, operations or structures described herein as a single instance. Finally, boundaries between various components, operations and data stores are somewhat arbitrary, and particular operations are illustrated in the context of specific illustrative configurations. Other allocations of functionality are envisioned and may fall within the scope of the disclosure. In general, structures and functionality presented as separate components in the example configurations may be implemented as a combined structure or component. Similarly, structures and functionality presented as a single component may be implemented as separate components. These and other variations, modifications, additions, and improvements may fall within the scope of the disclosure.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present application should not be read as implying that any particular element, step, or function is an essential or critical element that must be included in the claim scope. The scope of patented subject matter is defined only by the allowed claims. Moreover, none of the claims invokes 35 U.S.C. §112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. §112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A method comprising:
positioning a scanner head at a plurality of bin locations distributed in a width-wise direction across a sheet of flat stock material having a pattern of coating material disposed on at least one surface of the sheet of flat stock material, the scanner head configured to measure basis weight of the sheet;
taking at each of the bin locations and using the scanner head, a plurality of basis weight measurements of the sheet as the sheet is moving past the scanner head in a machine direction MD;
determining a baseline value for each of the bin locations based on the plurality of basis weight measurements taken while the scanner head was positioned at the bin location; and
generating a coating profile for the sheet based on a mapping of the baseline values determined for each of the bin locations to the corresponding bin locations, wherein the coating profile includes information indicative of an expected positioning for each of a plurality of patch gaps extending in a cross-wise orientation across the sheet.

2. The method of claim 1, wherein taking a plurality of measurements of the sheet at each of the bin locations as the sheet is moving past the scanner head in a machine direction MD includes maintaining the positioning of the scanner head at each of the bin locations for a predetermined time period.

3. The method of any preceding claim, wherein determining the baseline value for each of the bin locations based on the plurality of measurements taken while the scanner head was positioned at the bin location includes:
summing the values of the measurements taken while the scanner head was positioned at the bin location; and
dividing the sum of the values of the measures taken while the scanner head was positioned at the bin location by a number of the measurements taken while the scanner head was positioned at the bin location.

4. The method of any preceding claim, wherein the patch gaps comprise areas of the at least one surface of the sheet where no coating material is disposed.

5. The method of any preceding claim, further comprising:
scanning, using the scanning device, the sheet in a zig-zag pattern while taking measurements of the sheet; and
determining one or more quality parameters related to the pattern of coating disposed on the surface of the sheet by comparing the measurements taken in the zig-zag pattern to the coating profile generated for the sheet.

6. The method of claim 5, wherein determining the one or more quality parameters includes determining that the patch edges are positioned in the proper locations longitudinally along the length of the sheet.

7. The method of claim 5, wherein determining the one or more quality parameters includes determining that a coating for the areas of the sheet where coating material is disposed on the sheet is within an acceptable basis weight range.

8. The method of any preceding claim, wherein positioning the scanner head includes positioning the scanner head at each of the plurality of bin locations in a sequence of adjacent bin locations, the sequence of adjacent bin locations positioned in a cross-wise direction across the sheet and equally spaced in the cross-wise direction from one another across a width of the sheet.

9. The method of any of claims 1-7, wherein positioning the scanning device includes:
actuating the scanner head to make one or more cross-wise passes across a width of the sheet while taking s measurements of the sheet during the one or more cross-wise passes;
determining the location of the strip edges of the coating material disposed on the at least one surface of the sheet based on the measurements taken during the one or more cross-wise passes;
determining the location of areas in the cross-wise direction of the sheet that include coating material disposed on the at least one surface of the sheet;
positioning the scanner head at each of a first set of cross-wise positions around the determined locations of the strip edges, and taking a plurality of measurements of the sheet at each of the first set of cross-wise positions;
positioning the scanner head at one or more cross-wise positions determined to include coating material disposed on the at least one surface of the sheet, and taking a plurality of measurements of the sheet at each of the second set of cross-wise positions;
updating the coating profile for the sheet based on the measurement taken at each of the first set of cross-wise positions and the second set of cross-wise positions.

10. A system comprising:
a scanner apparatus comprising a scanner head coupled to a scanner frame, the scanner frame configured to move the scanner head back and forth in a cross-wise direction along the scanner frame while a sheet of flat stock material passes through the scanner frame in a machine direction MD, the sheet having a pattern of coating material disposed on at least one surface of the sheet, and wherein the scanner head is configured to take measurements of the sheet as the sheet moves in the machine direction MD past the scanner head;
a processor coupled to the scanner apparatus, the processor configured to:
control the positioning of the scanner head to measure basis weight of the sheet at each of a plurality of bin locations distributed in a width-wise direction across the sheet;
control the scanner head to take, at each of the bin locations, a plurality of measurements of the sheet as the sheet is moved past the scanner head in a machine direction MD;
receive at the processor the plurality of measurements taken by the scanner head a each of the bin locations;
determine a baseline value for each of the bin locations based on the plurality of measurements taken while the scanner head was positioned at the bin location; and
generate a coating profile for the sheet based on a set of baseline values determined for each of the bin locations, wherein the coating profile includes information indicative of an expected positioning for each of a plurality of patch gaps extending in a cross-wise orientation across the sheet.

11. The system of claim 10, wherein the control of the positioning of the scanner head at each of the plurality of bin locations in a sequence of adjacent bin locations, the sequence of adjacent bin locations positioned in a cross-wise direction across the sheet and equally spaced in the cross-wise direction from one another across a width of the sheet.

12. The system of either of claims 10 or 11, wherein the processor is configured to determine the baseline value for each of the bin locations based on the plurality of measurements taken while the scanner head was positioned at the bin location, the processor configured to:
sum the values of the measurements taken while the scanner head was positioned at the bin location; and
divide the sum of the values of the measures taken while the scanner head was positioned at the bin location by a number of the measurements taken while the scanner head was positioned at the bin location.

13. The system of any of claims 10-12, wherein the processor is further configured to:
control the operation of the scanner head to cause the scanner head to scan the sheet in a zig-zag pattern while taking measurements of the sheet; and
determine one or more quality parameters related to the pattern of the coating material disposed on the surface of the sheet by performing a comparison of the measurements taken in the zig-zag pattern to the coating profile generated for the sheet.

14. The system of any of claims 10-13, wherein the processor is further configured to position the scanning device by:
actuating the scanner head to make one or more cross-wise passes across a width of the sheet while taking s measurements of the sheet during the one or more cross-wise passes;
determining the location of the strip edges of the coating material disposed on the at least one surface of the sheet based on the measurements taken during the one or more cross-wise passes;
determining the location of areas in the cross-wise direction of the sheet that include coating material disposed on the at least one surface of the sheet;
positioning the scanner head at each of a first set of cross-wise positions around the determined locations of the strip edges, and taking a plurality of measurements of the sheet at each of the first set of cross-wise positions;
positioning the scanner head at one or more cross-wise positions determined to include coating material disposed on the at least one surface of the sheet, and taking a plurality of measurements of the sheet at each of the second set of cross-wise positions;
updating the coating profile for the sheet based on the measurement taken at each of the first set of cross-wise positions and the second set of cross-wise positions.

15. A non-transitory computer readable medium comprising program instructions that when executed by a processor, cause the processor to perform a method comprising:
controlling the positioning of a scanner head configured to measure of a coating provided on at least one surface of a sheet of flat stock material at each of a plurality of bin locations distributed in a width-wise direction across the sheet;
controlling the scanner head to take, at each of the bin locations, a plurality of measurements as the sheet is moved past the scanner head in a machine direction MD;
receiving, at the processor, the plurality of measurements taken by the scanner head a each of the bin locations;
determining a baseline value for each of the bin locations based on the plurality of measurements taken while the scanning device was positioned the bin location; and
generating a coating profile for the sheet based on a set of baseline values determined for each of the bin locations, wherein the coating profile includes information indicative of an expected positioning for each of a plurality of patch gaps extending in a cross-wise orientation across the sheet.
